(19) Europäisches Patentamt
European Patent Office
Office européen des brevets

(11) **EP 0 752 130 B1**

(12) **EUROPÄISCHE PATENTSCHRIFT**

(45) Veröffentlichungstag und Bekanntmachung des Hinweises auf die Patenterteilung:
**27.05.1998  Patentblatt 1998/22**

(21) Anmeldenummer: **95913042.8**

(22) Anmeldetag: **21.03.1995**

(51) Int Cl.⁶: **G06F 7/52**

(86) Internationale Anmeldenummer:
**PCT/DE95/00385**

(87) Internationale Veröffentlichungsnummer:
**WO 95/25998 (28.09.1995 Gazette 1995/41)**

(54) **MULTIPLIZIERER MIT GERINGER LAUFZEIT**

MULTIPLIER WITH REDUCED RUN TIME

MULTIPLICATEUR A DUREE D'EXECUTION REDUITE

(84) Benannte Vertragsstaaten:
**DE FR GB IT**

(30) Priorität: **21.03.1994  DE 4409613**
**12.09.1994  DE 4432432**
**12.09.1994  DE 4432425**

(43) Veröffentlichungstag der Anmeldung:
**08.01.1997  Patentblatt 1997/02**

(73) Patentinhaber: **SIEMENS AKTIENGESELLSCHAFT 80333 München (DE)**

(72) Erfinder:
 • **GREEN, Jörg-Michael D-10777 Berlin (DE)**
 • **SALOMON, Oliver D-82008 Unterhaching (DE)**

(56) Entgegenhaltungen:
 • **ELECTRONICS LETTERS, 25 SEPT. 1986, UK, Bd. 22, Nr. 20, ISSN 0013-5194, Seiten 1061-1062, ROORDA M 'Method to reduce the sign bit extension in a multiplier that uses the modified Booth algorithm'**
 • **ELECTRONICS LETTERS, Bd. 26, Nr. 17, 16. August 1990 Seiten 1413-1415, XP 000108958 BURGESS N 'REMOVAL OF SIGN-EXTENSION CIRCUITRY FROM BOOTH'S ALGORITHM MULTIPLIER-ACCUMULATORS'**
 • **INTERNATIONAL JOURNAL OF ELECTRONICS, Bd. 75, Nr. 2, 1. August 1993 Seiten 199-208, XP 000385414 SUNDER S 'A FAST MULTIPLIER BASED ON THE MODIFIED BOOTH ALGORITHM'**
 • **IEEE TRANSACTIONS ON COMPUTERS, Bd. 40, Nr. 11, 1. November 1991 Seiten 1181-1197, XP 000273315 STAMATIS VASSILIADIS ET AL 'HARD-WIRED MULTIPLIERS WITH ENCODED PARTIAL PRODUCTS'**
 • **IEE PROCEEDINGS G ELECTRONIC CIRCUITS & SYSTEMS., Bd. 138, Nr. 1, Februar 1991 STEVENAGE GB, Seiten 17-21, XP 000200236 R. RONCELLA ET AL. 'Application of a systolic macrocell-based VLSI design style to the design of a single-chip high-performance FIR filter'**

**Beschreibung**

Die Erfindung betrifft vereinfachte Multiplizierer für binär codierte Zahlen, die kürzere Laufzeiten als bekannte Multiplizierer aufweisen.

Zum Multiplizieren binär codierter Zahlen sind unterschiedliche Multipliziererstrukturen bekannt. Es werden sowohl seriell als auch parallel arbeitende Multiplizierverfahren angewendet. Als 4-Quadranten-Multiplizierer kann beispielsweise ein Feldmultiplizierer eingesetzt werden, dessen Algorithmus in der Zeitschrift 'IEEE Transactions on Computers', Vol. C-22, NO. 12, December 1973, S. 1045-1047 beschrieben ist, oder ein BOOTH-Multiplizierer, wie er in 'Integrierte digitale Schaltungen' von Klar, Springer Verlag 1993, S. 228 bis 232 beschrieben ist.

Der dargestellte BOOTH-Multiplizierer verwendet Carry-Ripple-Logik. Die 4-Quadranten-Multiplizierer können außer positiven Zahlen auch negative Zahlen in Form von Zweierkomplementen verarbeiten. Wird beispielsweise ein BOOTH-Multiplizierer zur Verkürzung der Rechenzeit in Carry-Save-Logik aufgebaut, muß das Vorzeichenbit in den einzelnen Stufen um mindestens zwei weitere Bitstellen ergänzt werden, die Eingängen von Halbaddierern oder Volladdierern der folgenden Additionsstufe zugeführt werden.

Beispielsweise werden durch Multiplikation des Multiplikanden mit jeweils einem Bit des Multiplikators Partialprodukte gebildet, von denen zunächst die niederwertigsten addiert werden. Zu der gebildeten Partialproduktzwischensumme wird dann jeweils ein weiteres Partialprodukt addiert.

Eine Grundregel beim Addieren von Zahlen in Zweierkomplement-darstellungen erfordert bei in Carry-Save-Technik ausgeführten Multiplizierern (Addierern) eine Ergänzung der Vorzeichenbits (dies sind die höchstwertigen Bits) bis zur höchsten Wertigkeit des höchstwertigen Summanden bzw. Partialproduktes erfolgt. Das bedeutet wieder, daß jedes Vorzeichenbit in den einzelnen Addiererreihen an die Eingänge von weiteren Addierern geführt werden muß.

Auch bei Multiplizierern mit Carry-Ripple-Technik werden durch Multiplikation des Multiplikanden mit jeweils einem Bit des Multiplikators Partialprodukte gebildet, von denen ebenfalls zunächst die niederwertigsten in Carry-Ripple-Technik addiert werden. Zu der gebildeten Partialproduktzwischensumme wird dann ebenfalls jeweils ein weiteres Partialprodukt addiert.

Die entsprechende Grundregel für das Addieren von Zahlen in Zweierkomplementdarstellung erfordert auch bei in Carry-Ripple-Technik ausgeführten Multiplizieren (Addierern), daß eine Ergänzung der Vorzeichenbits (dies sind die höchstwertigen Bits) bis zur höchsten Wertigkeit der erwarteten Summe erfolgt. Das bedeutet, daß jedes Vorzeichenbit an einen Eingang mindestens eines weiteren Addierers geführt werden muß.

Bei allen Multipliziererarten wird besonders durch die kapazitive Belastung durch weitere Addierereingänge die Laufzeit wesentlich erhöht.

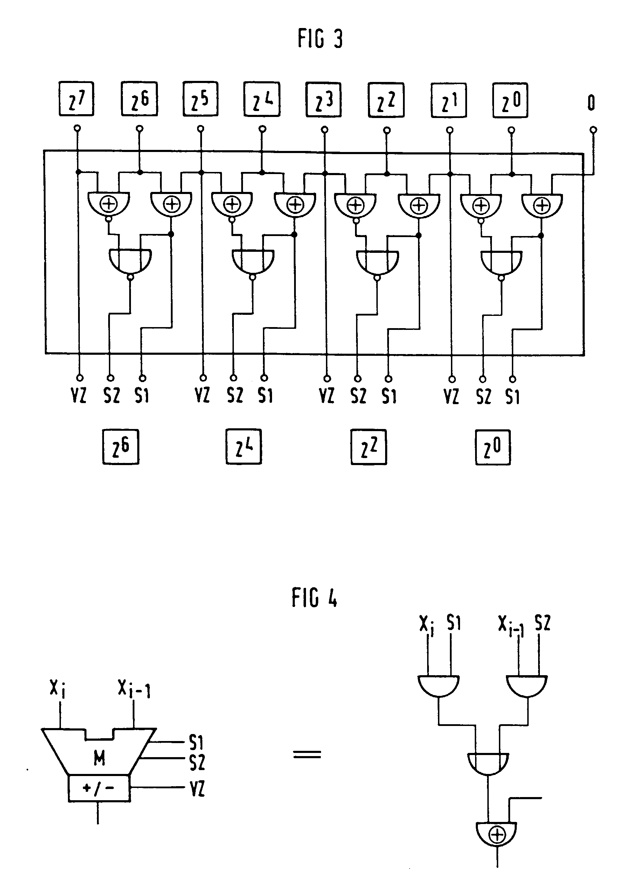

Aus "Electronics Letters", 25th September 1986, Vol. 22, No. 20, Seiten 1061 bis 1062 ist eine Methode zur Vereinfachung bei der Vorzeichenbitergänzung von Booth-Multiplizierern angegeben, die nach Figur 4 mit Volladdierern aufgebaut ist. Angaben zur weiteren Schaltungsvereinfachung fehlen jedoch.Es wird noch erwähnt, daß die Methode nicht auf Booth-Multiplizierer beschränkt ist. Jedoch führt deren Anwendung bei anderen Multipliziertypen nicht zu einem optimalen Ergebnis.

Aufgabe der Erfindung ist es, Multiplizierer mit einfacherem Aufbau und verringerter Rechenzeit anzugeben.

Diese Aufgabe wird durch einen Multiplizierer gemäß Anspruch 1 gelöst.

Besonderer Vorteil dieses Multiplizierers ist seine verringerte Rechenzeit. Darüber hinaus wird aber auch noch die Schaltungsanordnung vereinfacht, die Layoutfläche und der Leistungsverbrauch verringert.

Bei allen Multiplizierertypen ist das Prinzip der Vorzeichenergänzung bzw. Vorzeichenkorrektur anwendbar, deren Struktur, beispielsweise durch paralleles Berechnen von Zwischensummen, Ergänzungen der Vorzeichenbits um eine oder mehrere Binärstellen erfordert.

Ein besonderer Vorteil des in Carry-Save-Logik ausgeführten Multiplizierers ist die verringerte Rechenzeit, die zum einen durch das parallele Addieren der drei niederwertigsten Partialprodukte und zum anderen durch die Verringerung der zu treibenden Addierereingänge erreicht wird.

Ein Multiplizierer in Carry-Ripple-Technik macht einen Endaddierer überflüssig. Durch die Vorzeichenergänzung verringert sich die Rechenzeit. Darüber hinaus wird wieder die Schaltungsanordnung vereinfacht und die Layoutfläche sowie der Leistungsverbrauch verringert.

Bereits bei einem üblichen Feldmultiplizierer ergeben sich beträchtliche Schaltungsvereinfachungen. Diese Vorteile werden bei "parallel arbeitenden" Feldmultiplizierern mit einer mehrere Bits umfassenden Vorzeichenbitergänzung natürlich noch größer.

Eine weitere vorteilhafte Schaltungsvereinfachung kann erfolgen, indem Halbaddierer, deren einem Eingang eine Eins (logische 1) zugeführt wird, jeweils durch einen Inverter ersetzt werden. Die kapazitive und ohmsche Belastung durch einen Invertereingang ist gegenüber einem Addierereingang nahezu vernachlässigbar und die Struktur wird weiter vereinfacht.

Eine weitere Laufzeitverringerung wird durch den Ersatz von Volladdierern, denen invertierte Eingangssignale zugeführt werden, durch Inverter erzielt.

EP 0 752 130 B1

Eine weitere vorteilhafte Schaltungsvereinfachung kann erfolgen, indem Serienschaltungen von jeweils einem Halbaddierer und einem Inverter fortgelassen werden können.

Selbstverständlich können Multiplizierer auch in Mischformen von Carry-Ripple- und Carry-Save-Technik ausgeführt werden.

Das bei Multiplizierern verwendete Prinzip kann natürlich auch für Additionsschaltungen verwendet werden. Diese entsprechen einem vereinfachten trivialen Multiplizierer, der anstelle von Partialprodukten lediglich Summanden verarbeitet.

Ausführungsbeispiele der Erfindung werden anhand von Figuren näher erläutert.

Es zeigen:

Figur 1      einen vorteilhaften BOOTH-Multiplizierer,
Figur 2      einen üblichen BOOTH-Multiplizierer,
Figur 3      einen BOOTH-Codierer,
Figur 4      einen BOOTH-Multiplexer,
Figur 5      einen Endaddierer,
Figur 6      einen vereinfachten BOOTH-Multiplizierer,
Figur 7      eine Ersatzschaltung für einen Halbaddierer und
Figur 8      eine Ersatzschaltung für einen Volladdierer bei speziellen Eingangskombinationen.
Figur 9      einen Feldmultiplizierer in Carry-Save-Logik,
Figur 10     eine erfindungsgemäße Ausführungsform des Feldmultiplizierers,
Figur 11     einen weiter verbesserten Feldmultiplizierer,
Figur 12     einen optimierten Feldmultiplizierer,
Figur 13     einen Ausschnitt der Multipliziererschaltung,
Figur 14     eine Variante dieses Ausschnitts mit erfindungsgemäßer Vorzeichenbitergänzung,
Figur 15     eine weiter vereinfachte Multipliziererteilschaltung,
Figur 16     deren optimierte Ausführungsform,
Figur 17     einen bekannten Feldmultiplizierer in Carry-Ripple-Logik,
Figur 18     einen erfindungsgemäßen Feldmultiplizierer,
Figur 19     eine optimale Ausführungsform des erfindungsgemäßen Feldmultiplizierers,
Figur 20     einen Ausschnitt einer Multipliziererschaltung
Figur 21     eine Variante dieser Multipliziererschaltung entsprechend der Erfindung und
Figur 22     deren optimierte Ausführungsform.

Anhand des BOOTH-Multiplizierers sollen die Prinzipien der Vorzeichenerweiterung und der Schaltungsvereinfachung näher erläutert werden.

Auf **Seite 231** des eingangs erwähnten Buches 'Integrierte digitale Schaltungen' ist ein Ausschnitt des Logikplans eines BOOTH-Multiplizierers in Carry-Ripple-Arithmetik detailliert dargestellt. Man erkennt, daß jeweils der erste und letzte BOOTH-Multiplexer einfacher ausgeführt werden kann. Die Vorzeicheninvertierung ist in die Addierer verlagert.

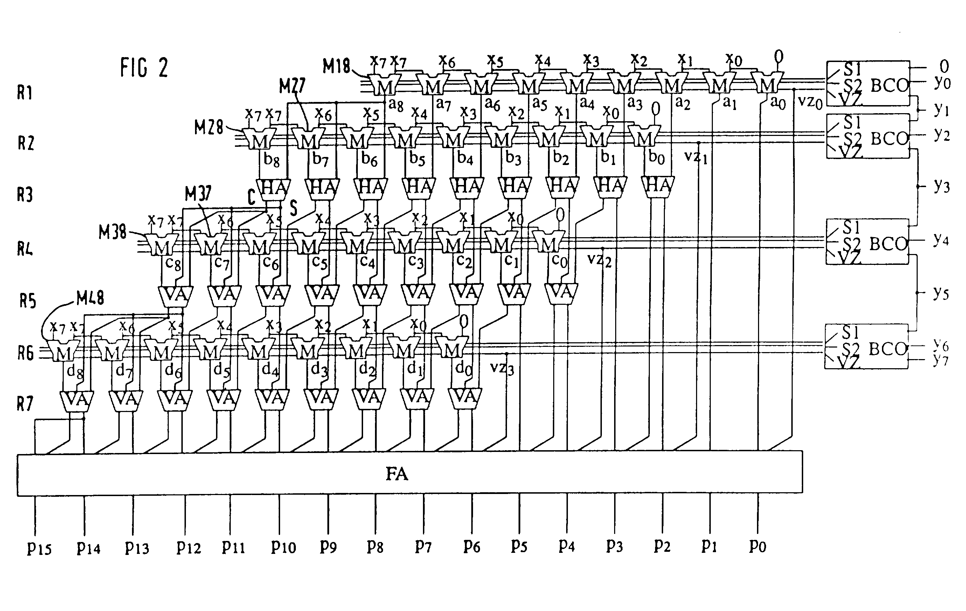

In der regelmäßigen Anordnung eines bekannten 4-Quadranten-BOOTH-Multiplizierers nach **Figur 2** wird die Summe der Partialprodukte in möglichst gleichmäßig strukturierten Schaltungen ermittelt (beispielsweise IEEE Journal of Solid-State Circuits, Vol. SC-20, No. 2, April 1985, page 542 -546). Der BOOTH-Multiplizierer enthält im oberen Bereich zwei Reihen R1 und R2 von BOOTH-Multiplexern M. Es folgt eine Reihe R3 von (im wesentlichen) Halbaddierern HA. Diesen folgen abwechselnd wieder Reihen R4, R6 von BOOTH-Multiplexern M und Reihen von Volladdierern VA R5 und R7. Die Schaltung wurde im wesentlichen in Carry-Save-Arithmetik realisiert. Der Multiplikator $y_7...$ $y_0$ wird in BOOTH-Codierern BCO in sogenannte BOOTH-Koeffizienten (BOOTH-Steuersignale) VZ, S1, S2 umgesetzt, die als Steuersignale für die BOOTH-Multiplexer dienen.

Um eine richtige Vorzeichenverarbeitung zu erreichen muß in der bekannten Schaltung zunächst das Vorzeichenbit $a_8$ bis zur höchsten Wertigkeit des folgenden Partialprodukts ergänzt werden. In derselben Weise müssen die Carry-Bits C und die Summenbits S der höchstwertigen Addierzellen jeweils bis zur höchsten Wertigkeit des folgenden Partialprodukts ergänzt werden.

Dies hat zur Folge, daß der Ausgang des 'höchstwertigen' (am weitesten links angeordneten) BOOTH-Multiplexers M18 mit den Eingängen von drei Halbaddierern verbunden werden muß. Ebenso werden die Summenbit- und Carrybitausgänge der höchstwertigen Halbaddierer der Reihe R3 und der Volladdierer der Reihe R5 zur Vorzeichenergänzung jeweils mit Eingängen von drei Volladdierern der folgenden Addiererreihe verbunden. Die erhöhte (kapazitive) Belastung des Ausgangs wirkt sich bei allen Logikfamilien nachteilig auf die Verzögerungszeiten aus.

Die Berechnung der Produktsumme erfolgt in mehreren Stufen, wobei die Summe der Partialprodukte $a_8$, $a_7$, $a_6$,... $a_0$; $b_8$, $b_7$, $b_6$,...$b_0$; $c_8$, $c_7$,... sukzessiv gebildet wird. In den Halbaddierern HA bzw. Volladdierern VA wird das in jeder Reihe gebildete Partialprodukt zu der in den Vorreihen schon gebildeten Partialprodukt-Zwischensumme addiert, wobei Summenbits S und Carry-Bits C der Zwischensumme an die folgende Addiererreihe geführt werden.

Das höchstwertige Bit eines Partialprodukts gibt das jeweilige Vorzeichen an. Für die richtige Vorzeichenverarbeitung müssen die Vorzeichenbits ebenfalls bis zur höchsten Wertigkeit des folgenden Partialprodukts erweitert werden.

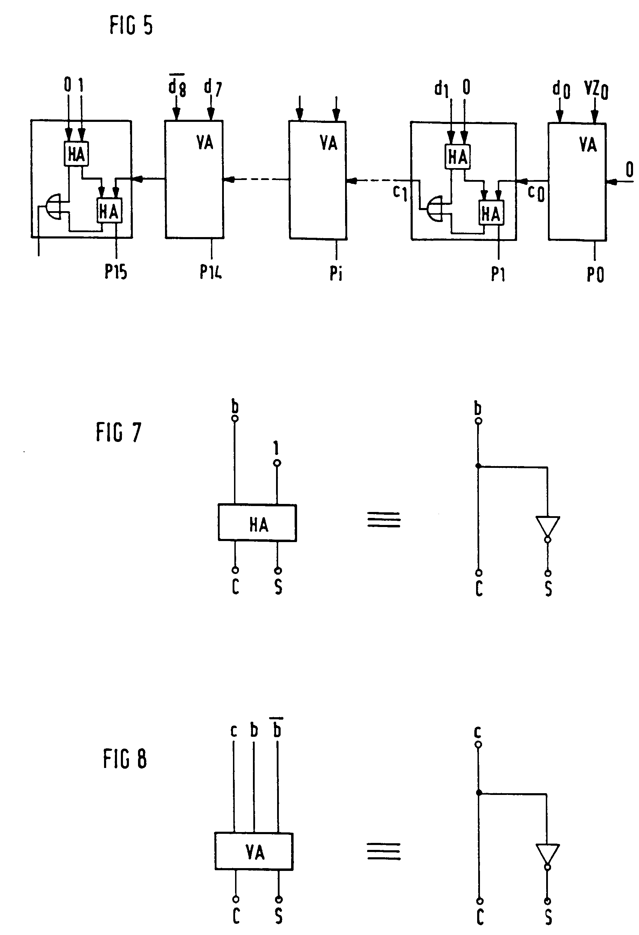

In einem Endaddierer FA (Figur 5) wird das endgültige Produkt aus den BOOTH-Koeffizienten VZ, den nicht weiter kaskadierten Partialproduktbits und den Zwischensummenbits errechnet. Für den Endaddierer werden bei den realisierten Multiplizierern Schaltungsprinzipien mit möglichst geringen Laufzeiten verwendet; der dargestellte Endaddierer dient lediglich zur Erläuterung der Funktion.

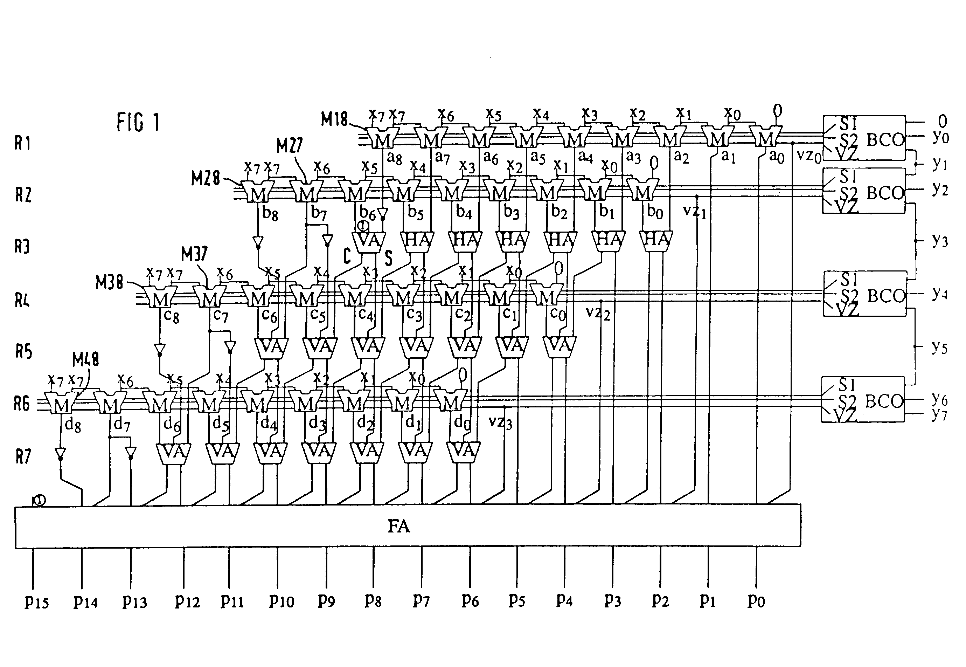

Gegenüber einem Feldmultiplizierer wird bei einem einfach modifizierten BOOTH-Multiplizierer die Anzahl der zu bildenden Partialprodukte halbiert, in Figur 1 auf $a_8...a_0$; $b_8...b_0$; $c_8....c_0$; $d_8...d_0$. Dies wird erreicht, indem die ungeradzahligen Multiplikatorbits $Y_i = y_1, y_3, y_5,...$ (i = 1, 3, 5,...) eliminiert werden, indem deren Information auf die benachbarten geradzahligen Binärstellen aufgeteilt wird:

$$(1) \qquad Y_i \cdot 2_i = Y_i[2_i^{+1} - 2 \cdot 2^{i-1}]$$

i = 0, 1, 2, 3....

$Y_i = 0, 1$

So wird beispielsweise die Information für das viertniederwertigste Bit (i = 3) aufgeteilt in

$$(2) \qquad Y_3 \cdot 2^3 = Y_3[2^4 - 2 \cdot 2^2]$$

In Figur 3 ist die Schaltung von entsprechenden BOOTH-Codierern BCO dargestellt, die die Umsetzung des Multiplikators entsprechend Formel (1) realisieren.

In Figur 4 ist ein sogenannter BOOTH-Multiplexer dargestellt, dessen Wirkungsweise kurz erläutert wird. Jeder BOOTH-Codierer wandelt jeweils 3 Multiplikatorbits zu binären BOOTH-Koeffizienten VZ, S1, S2 um, die den Wertebereich - 2, -1, 0, 1, 2 angeben. Entsprechend den BOOTH-Koeffizienten muß der Multiplikand einmal bzw. zweimal addiert oder subtrahiert oder ignoriert werden. Im Fall einer zweifachen Addition wird der Multiplikand mit Hilfe der BOOTH-Multiplexer M um ein Bit verschoben. Für eine erforderliche Subtraktion wird der Multiplexerausgang invertiert.

Durch einen BOOTH-Multiplexer nach Figur 4 wird die Funktion $F_i$ realisiert.

$$(3) \qquad F_i = VZ \oplus (S2 \wedge X_{i-1} \vee S1 \wedge X_i)$$

VZ = 0/1 für +/-; VZ, S1, S2 - BOOTH-Koeffizienten

Die Ausgangssignale $a_i$, $b_i$, $c_i$ und $d_i$ ($0 \leq i \leq 8$) der BOOTH-Multiplexer entsprechen jeweils Partialprodukten in Einerkomplement-Darstellung. Zur Umwandlung der Partialprodukte in Zweierkomplementzahlen werden die Vorzeichenbits $VZ_a$ ($0 \leq a \leq 3$) der BOOTH-Koeffizienten im Endaddierer FA addiert.

Formal werden sowohl die Einerkomplement-Partialprodukte als auch die Vorzeichenbits wie Zweierkomplement-Zahlen behandelt.

In Figur 6 ist ein BOOTH-Multiplizierer dargestellt, dessen Schaltung diese Nachteile nicht mehr aufweist.

Vergleicht man nun diese Schaltungsanordnung mit der des herkömmlichen, so sieht man, daß die Last des jeweils höchstwertigen BOOTH-Multiplexers M18, M28, M38... auf eine einfache Last reduziert ist. Der jeweils dargestellte Inverter kann durch eine Modifizierung des entsprechenden BOOTH-Multiplexers entfallen.

Diese Schaltungsanordnung kann auch als Zwischenstufe zu einer aufwandsmäßig optimierten Schaltung angesehen werden. Die Halbaddierer HA, die jeweils an den Ausgang eines zweithöchsten BOOTH-Multiplexers M27, M37, .. angeschaltet sind, an dessen Ausgang ein Partialproduktbit $b_7$ bzw. $c_{7,..}$ abgegeben wird, können durch einen Inverter ersetzt werden.

So werden die Halbaddierer eingespart, deren einem Eingang sonst eine logische Eins zugeführt wird. Die äquivalenten Schaltungen sind in Figur 7 dargestellt.

Die Umwandlung der Schaltung kann rein schematisch erfolgen, wobei an der höchstwertigen Stelle $P_{15}$ ebenfalls eine Eins addiert wird.

Zum besseren Verständnis der Erfindung soll die Vorzeichenverarbeitung zunächst mathematisch erläutert werden.

In der folgenden Tabelle 1 sind die Zuordnung der Multiplikatorbits MR, die Partialprodukte $PP_1$ bis $PP_4$ und das Produkt PR dargestellt, das durch Summenbildung der Partialproduktbits und der Vorzeichenkoeffizienten ermittelt wird.

| PP | Multiplikand $(x_7\ x_6\ x_5\ x_4\ x_3\ x_2\ x_1\ x_0)$ | | MR |
|---|---|---|---|
| $PP_1$ | $a_8\ a_8\ a_8\ a_8\ a_8\ a_8\ a_8\ a_8\ a_7\ a_6\ a_5\ a_4\ a_3\ a_2\ a_1\ a_0$ | | $y_1\ y_0\ 0$ |
| $PP_2$ | $b_8\ b_8\ b_8\ b_8\ b_8\ b_8\ b_7\ b_6\ b_5\ b_4\ b_3\ b_2\ b_1\ b_0$ | | $y_3\ y_2\ y_1$ |
| $PP_3$ | $c_8\ c_8\ c_8\ c_8\ c_7\ c_6\ c_5\ c_4\ c_3\ c_2\ c_1\ c_0$ | | $y_5\ y_4\ y_3$ |
| $PP_4$ | $d_8\ d_8\ d_7\ d_6\ d_5\ d_4\ d_3\ d_2\ d_1\ d_0$ | | $y_7\ y_6\ y_5$ |
| | $0\ 0\ 0\ 0\ 0\ 0\ 0\ 0\ 0\ vz_30\ vz_20\ vz_10\ vz_0$ | | |
| PR | $P_{15}P_{14}P_{13}P_{12}P_{11}P_{10}P_9\ P_8\ P_7\ P_6\ P_5\ P_4\ P_3\ P_2\ P_1\ P_0$ | | |

Tabelle 1

Eine Zweierkomplementzahl X mit der Wortbreite n kann wie folgt dargestellt werden.

$$(4)\quad X = -x_{n-1}\cdot 2^{n-1} + \sum_{i=0}^{n-2} x_i\cdot 2^i \qquad i = 0,\ 1,\ \ldots\ n-1$$

Die Produktvorzeichensumme $S_{PV}$ der zur maximalen Summenwortbreite von 16 Bits erweiterten Vorzeichen-Partialproduktbits $a_8$, $b_8$, $c_8$ und $d_8$, die **fett** in der Tabelle 1 dargestellt sind, ergibt sich zu:

$$(5)\quad S_{PV} = a_8(-2^{15} + 2^{14} + \ldots + 2^8)$$

$$+ b_8(-2^{15} + 2^{14} + \ldots + 2^{10})$$

$$+ c_8(-2^{15} + 2^{14} + \ldots + 2^{12})$$

$$+ d_8(-2^{15} + 2^{14})$$

mit

$$(6)\quad \sum_{i=j}^{n-1} 2^i = 2^n - 2^j$$

ergibt sich:

$$(7)\quad S_{PV} = a_8(-2^{15} + 2^{15} - 2^8) + b_8(-2^{15} + 2^{15} - 2^{10})$$

$$+ c_8(-2^{15} + 2^{15} - 2^{12}) - d_8\cdot 2^{14}$$

$$= -a_8\cdot 2^8 - b_8\cdot 2^{10} - c_8\cdot 2^{12} - d_8\cdot 2^{14}$$

Durch Erweiterung mit $(-2^8 + 2^8)$, den negativen und positiven Binärwert des zu erweiternden Vorzeichenbits des ersten Partialprodukts PP1, sowie durch den Wertebereich überschreitende Modulo $2^{16}$- Addition ($\oplus$) von $2^{16}$ ergibt sich:

$$(8) \quad S_{PV} = -a_8 \cdot 2^8 - b_8 \cdot 2^{10} - c_8 \cdot 2^{12} - d_8 \cdot 2^{14}$$

$$\oplus (2^{16} - 2^8 + 2^8)$$

$$= -a_8 \cdot 2^8 - b_8 \cdot 2^{10} - c_8 \cdot 2^{12} - d_8 \cdot 2^{14}$$

$$+ (2^{15} + 2^{14} + \ldots + 2^8) + 2^8$$

$$= 2^{15} + (1 - d_8) \cdot 2^{14} + 2^{13} + (1 - c_8) \cdot 2^{12}$$

$$+ 2^{11} + (1 - b_8) \cdot 2^{10} + 2^9 + (1 - a_8) \cdot 2^8 + 2^8$$

mit

$$(9) \quad (1-k) = \overline{k},$$

('-' = Modulo-2-Subtraktion, k = $a_8$, $b_8$, $c_8$,..) ergibt sich:

$$(10) \quad S_{PV} = 2^{15} + \overline{d_8} \cdot 2^{14} + 2^{13} + \overline{c_8} \cdot 2^{12} + 2^{11} + \overline{b_8} \cdot 2^{10} + 2^9 + \overline{a_8} \cdot 2^8 + 2^8$$

Dies Ergebnis bedeutet:

im Gegensatz zur Darstellung nach Gleichung (5) existieren nur noch Partialprodukte mit positiven Koeffizienten; die Vorzeichenbits $a_8$, $b_8$, $c_8$ und $d_8$ der Partialprodukte werden invertiert; die Umwandlung eines Halbaddierers in einen Inverter entsprechend der Formel (9) wurde dabei bereits berücksichtigt; zu den Partialproduktbits mit den Wertigkeiten $2^8$, $2^9$, $2^{11}$, $2^{13}$ und $2^{15}$ muß eine Eins (die der jeweiligen Zweierpotenz entspricht) addiert werden.

Die Realisierung dieser Berechnung läßt sich unmittelbar in Figur 6 erkennen, in der als äquivalente Schaltung der Term $\overline{b_8} \cdot 2^{10}$ durch einen Halbaddierer realisiert ist.

Die Invertierung der Partialproduktbits erfolgt am Ausgang des BOOTH-Multiplexers M18, M28, M38 und M48 oder durch jeweils einen zur besseren Übersicht dargestellten Inverter und betrifft die Partialproduktbits $a_8$, $b_8$, $c_8$, $d_8$.

Die Zweierpotenzen $2^8$, $2^9$, $2^{11}$, $2^{13}$ und $2^{15}$ werden den entsprechenden Addierern und dem Endaddierer FA zugeführt. Die Additionen sind auch bei anderen Schaltungsvarianten möglich. Wie nachstehend unter 2) beschrieben kann die Schaltung weiter vereinfacht werden.

Anstelle der mathematischen Berechnung kann auch schematisch vorgegangen werden. Auch sind weitere Vereinfachungen möglich.

1) In einem ersten Schritt wird die Vorzeichenergänzung durch folgende Gleichung realisiert:

$$(11) \quad a_m 2^{m+p} \ldots + a_m 2^{m+2} + a_m 2^{m+1} + a_m 2^m$$

$$= 2^{m+p} \ldots \oplus 2^{m+2} \oplus 2^{m+1} \oplus \overline{a_m} 2^m \oplus 2^m$$

$\oplus =$      Modulo-$2^{m+p}$-Addition
m      Wertigkeit des Vorzeichenbits
m + p      Wertigkeit des höchstwertigsten ergänzten Vorzeichenbits

Bei einer Vorzeichenerweiterung um zwei Binärstellen für die erste Addierreihe gilt:

$$(12) \quad a_8 2^{10} + a_8 2^9 + a_8 2^8$$

$$= 2^{10} + 2^9 + (2^8 + \overline{a_8} 2^8)$$

Entsprechend ist die Schaltung der Addiererreihe R3 in Figur 6 umgeformt.

Die Umformungen nach (12) sind in den Logiktabellen angegeben:

$a_8 = 0:$                               $a_8 = 1:$

| $2^{10}$ | $2^9$ | $2^8$ |
|---|---|---|
| 0 | 0 | 0 |

| 1 | 1 | 1 |
| + | | 1 |

| 0 | 0 | 0 |

| $2^{10}$ | $2^9$ | $2^8$ |
|---|---|---|
| 1 | 1 | 1 |

| 1 | 1 | 1 |
| + | | 0 |

| 1 | 1 | 1 |

Das jeweilige Übertragsbit, hier $2^{m+p+1}$ ($=2^{11}$), wird nicht benötigt.
Schaltungsmäßig bedeutet die Realisation der Gleichung:

eine Invertierung des Vorzeichenbits $a_m$ und eine Addition von $2^m$, d. h. einer Eins, in einem Volladdierer VA anstelle eines Halbaddierers HA ($a_8$ in Figur 1 oder Figur 6; Reihe R3).

und jeweils die Addition von einer konstanten Eins (entspricht $2^{m+1}$ und $2^{m+2}$) bei den höherwertigeren Stellen in einem Halbaddierer HA (Fig. 6, Reihe R3).

2) Im zweiten Schritt werden die Halbaddierer, denen eine konstante Eins (log. 1) zugeführt wird, z.B. die beiden höchstwertigen Halbaddierer in der ersten Addiererreihe R3 in Figur 6, ersetzt gemäß:

$$(13) \qquad HA: \qquad S = b_m \oplus 1 = \overline{b_m}$$

$$C = b_m \cdot 1 = b_m$$

d.h. das Summenbit S entspricht dem invertierten Eingangssignal $b_m$, das Carry-Bit C entspricht dem Eingangssignal $b_m$ (Fig. 7).
Da beim höchstwertigen Halbaddierer der Übertrag nicht benötigt wird, muß nur das invertierte Partialproduktbit $\overline{b}$ verdrahtet werden (dies ist in den weiteren Addiererreihen des Multiplizierers in Figur 6 bereits erfolgt).
In Figur 1 sind dann jeweils die beiden höchstwertigen Halbaddierer aller Addiererreihen durch Inverter ersetzt.
3) Im dritten Schritt können jeweils die Funktionen der beiden höchstwertigen Volladdierer VA der weiteren Addiererreihen R5 und R7 in Figur 2 ersetzt werden gemäß:

$$(14) \qquad VA: \qquad S = c_m \oplus b \oplus \overline{b} = \overline{c_m}$$

$$C = c_m (b + \overline{b}) + b\overline{b} = c_m$$

Die entsprechende Schaltung ist in Figur 8 dargestellt.
Die Volladdierer können jeweils zunächst durch einen Halbaddierer, der beispielsweise entsprechend Figur 6 an den BOOTH-Multiplexer M37 angeschaltet ist, oder durch einen Inverter gemäß Figur 8 ersetzt werden. Diese Maßnahme führt zu einem schaltungsmäßigen Aufbau nach Figur 1.
Diese Figur zeigt einen vorteilhaften BOOTH-Multiplizierer, bei dem Halbaddierer und Volladdierer aufgrund der Schaltungsvereinfachung durch Inverter ersetzt sind.
Ferner können ebenso die Schaltungen für Volladdierer, denen eine konstante Eins zugeführt wird, vereinfacht werden.

$$(15) \qquad VA: \qquad S = a \oplus b \oplus 1 = \overline{a \oplus b}$$

$$C = a \wedge b \vee 1 \wedge a \vee 1 \wedge b = a \vee b$$

Der Volladdierer VA, der eine konstante Eins addiert, kann also durch ein EX-NOR-Gatter und ein ODER-Gatter ersetzt werden.

Das Prinzip der Vorzeichenergänzung kann für unterschiedliche Multiplizierertypen angewendet werden, auch wenn eine Vorzeichenergänzung um mehr als zwei Stellen erfolgen muß (z. B. M. Belleville et al."A 16*16 bits Multiplier 0,5 μm CMOS technology", Proceedings of ESSCIRC'91, Milan/Italy, Sept.1991).

Bei der "niederwertigsten" Vorzeichenstelle erfolgt - wie bisher - eine Invertierung des Vorzeichenbits und die Addition einer logischen "1". In den höherwertigeren Halbaddierern (Addierern) wird eine konstante log. "1" hinzuaddiert, oder sie werden durch einen Inverter ersetzt.

In entsprechender Weise werden die weiteren Addiererreihen modifiziert, d. h. die mittlere geänderte Addiererschaltung, der in Figur 1 das Partialproduktbit $b_7$ zugeführt wird, tritt häufiger auf.

Muß in einer Addiererreihe nur eine Vorzeichenstelle ergänzt werden, so ist hierzu ein Volladdierer und ein Halbaddierer bzw. Inverter erforderlich (der Halbaddierer HA in Figur 6, dem das Partialproduktbit $b_7$ zugeführt wird, würde entfallen).

Die Erfindung wird nun an einem Feldmultiplizierer in Carry-Save-Technik erläutert.

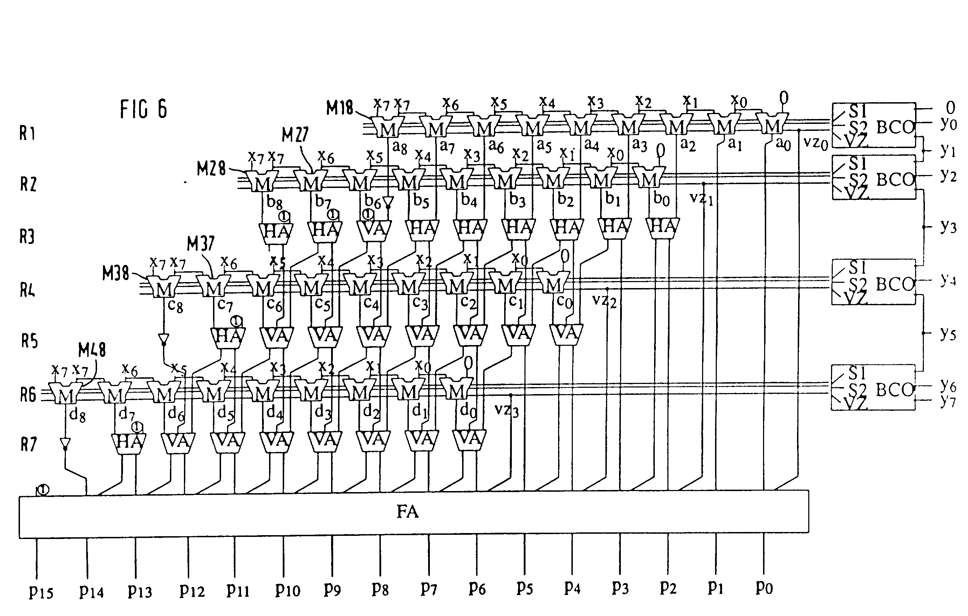

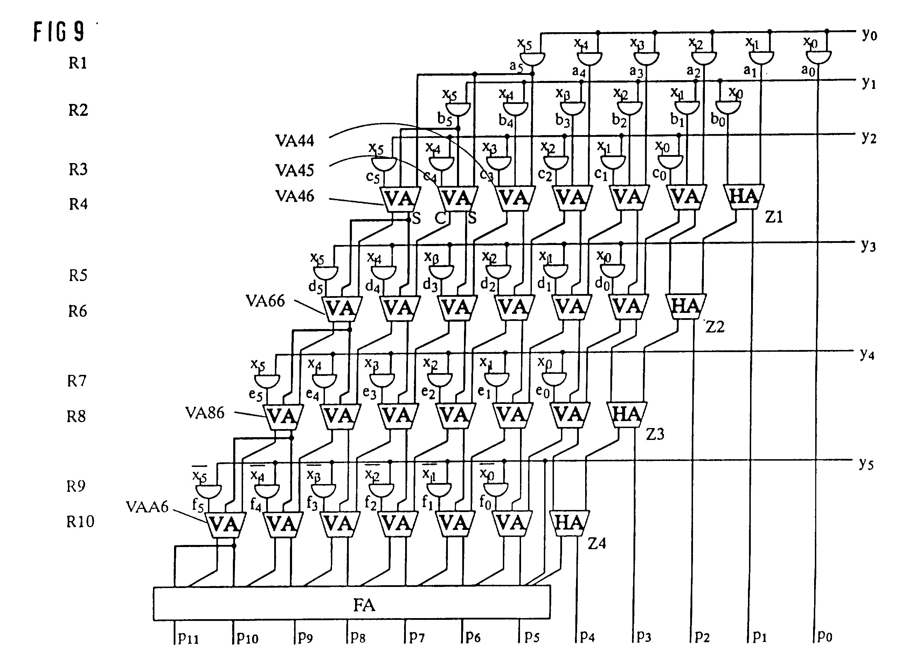

In Figur 9 ist ein solcher Multiplizierer dargestellt. In Multipliziererreihen R1, R2, R3, R5 ,R7 und R9 werden Partialprodukte $a_5....a_0$, $b_5....b_0$, ..., $f_5....f_0$ durch Multiplikation des Multiplikanden $x = x_5....x_0$ mit jeweils einem Bit des Multiplikators $y = y_5....y_0$ gebildet. Die ersten drei Partialprodukte $a_5....a_0$, $b_5....b_0$, $c_5....c_0$ werden parallel in einer ersten Addiererreihe R4 zu einer 'Zwischensumme' Z1 zusammengefaßt, die aus Summenbits "S" und "Carrybits "C" besteht (diese sind in Figur 9 aus Gründen der Übersichtlichkeit nur beim Volladdierer VA45 bezeichnet).

In weiteren Addiererreihen R6, R8 und R10 wird jeweils ein weiteres Partialprodukt $d_5....d_0$, ..., $f_5....f_0$ zu diesem Zwischenwert hinzuaddiert.

Die zu vereinfachende Verdrahtung der Vorzeichenbits ist mit breiteren Linien dargestellt. In der ersten Addiererreihe R4 ist das Vorzeichenbit $a_5$ des ersten Partialproduktes $a_5....a_0$ an die drei höchstwertigen Volladdierer VA44 .. VA46 geführt und das Vorzeichenbit $b_5$ des zweiten Partialproduktes $b_5....b_0$ ebenfalls an dieselben beiden höchstwertigen Volladdierer VA45 und VA46 geführt.

Bei der Addiererreihe R4 und den nächsten Addiererreihen ist jeweils das am höchstwertigen Volladdierer VA46, VA66, VA86, ... abgegebene Summenbit um eine Bitstelle zu ergänzen.

Das letzte Partialprodukt wird durch Multiplikation des Zweierkomplements des Multiplikanden x mit dem Vorzeichenbit $y_k$ des Multiplikators y gebildet. In einem Endaddierer FA, z.B. einem Ripple-Addierer, wird das Endprodukt aus den Summen- und Carrybits errechnet.

Als Produkt wird bei einer Darstellung der negativen Zahlen im Zweierkomplement entsprechend (16) errechnet:

$$(16) \quad xy = \sum_{i=0}^{k-1} xy_i \cdot 2^i \quad + (\bar{x} + 1)y_k \cdot 2^k \qquad x = x_m \ldots x_0$$

$$Y = y_k \ldots y_0$$

Die Schaltung soll im Bereich der höchstwertigen Volladdierer VA46 ....VAA6 vereinfacht werden.

Eine Anwendung des bekannten Algorithmus, bei dem die Vorzeichenbits invertiert werden und jeweils eine Eins addiert wird, führen nicht zum Ziel, da dann jeweils Addierer VA44, VA45 mit vier Eingängen verwendet werden müßten.

Die erforderliche Methode zur Schaltungsvereinfachung soll zunächst nur bei Betrachtung der Vorzeichenbits von zwei Zahlen erläutert werden; sie kann problemlos erweitert werden.

In einem ersten Schritt wird die Vorzeichenbitergänzung für ein Vorzeichenbit $a_k$ durch folgende Gleichung realisiert.

$$(17) \quad a_k \cdot 2^{k+p} ... + ....a_k \cdot 2^{k+2} + a_k \cdot 2^{k+1} + a_k \cdot 2^k$$

$$= 2^{k+p} ... \oplus ... 2^{k+2} \oplus \bar{a} \cdot 2^{k+1} \oplus 2^{k+1} \oplus a_k 2^k$$

$\oplus =$      Modulo-$2^{k+p+1}$-Addition

$k =$      Wertigkeit des Vorzeichenbits

$k+p =$      Wertigkeit des ergänzten höchstwertigen Vorzeichenbits

Unter Vernachlässigung der niederwertigeren Bits gilt z.B. mit k = 5:

$$(18) \qquad a_5 \cdot 2^7 + a_5 \cdot 2^6 = 2^7 + \bar{a}_5 \cdot 2^6 + 2^6$$

und

$$(19) \qquad b_5 \cdot 2^7 + b_5 \cdot 2^6 = 2^7 + \bar{b}_5 \cdot 2^6 + 2^6 \cdot$$

$\bar{a}_5, \bar{b}_5$ - invertierte Vorzeichenbits

Eine Addition dieser Bits - ergänzt um die Addition der höchstwertigen Bits $c_5$, $c_4$ einer weiteren Zahl - läßt sich nach Wertigkeiten spaltenweise geordnet in Tabellenform darstellen:

(20)

| $2^7$ | $2^6$ | | $2^7$ | $2^6$ | | $2^7$ | $2^6$ |
|---|---|---|---|---|---|---|---|
| $a_5$ | $a_5$ | | $1$ | $(\bar{a}_5 + 1)$ | | | $\bar{a}_5$ |
| $+b_5$ | $+b_5$ | $\equiv$ | $+1$ | $(\bar{b}_5 + 1)$ | $\equiv$ | $+1$ | $+\bar{b}_5$ |
| $+c_5$ | $+c_4$ | | $+c_5$ | $+ c_4$ | | $+c_5$ | $+c_4$ |

Die mittleren beiden Spalten sind entsprechend den Formeln (18) und (19) umgeformt. Bei den rechten beiden Spalten wurde die Addition der log. Einsen bereits durchgeführt. Die in den rechten beiden Spalten dargestellte Umformung ist so zu interpretieren, daß die Summe durch Addition der invertierten Vorzeichenbits der Wertigkeit $2^6$ und des Bits $c_4$ des dritten Partialproduktes sowie durch Addition einer logischen 1 und des Vorzeichenbits $c_5$ des dritten Partialproduktes errechnet wird.

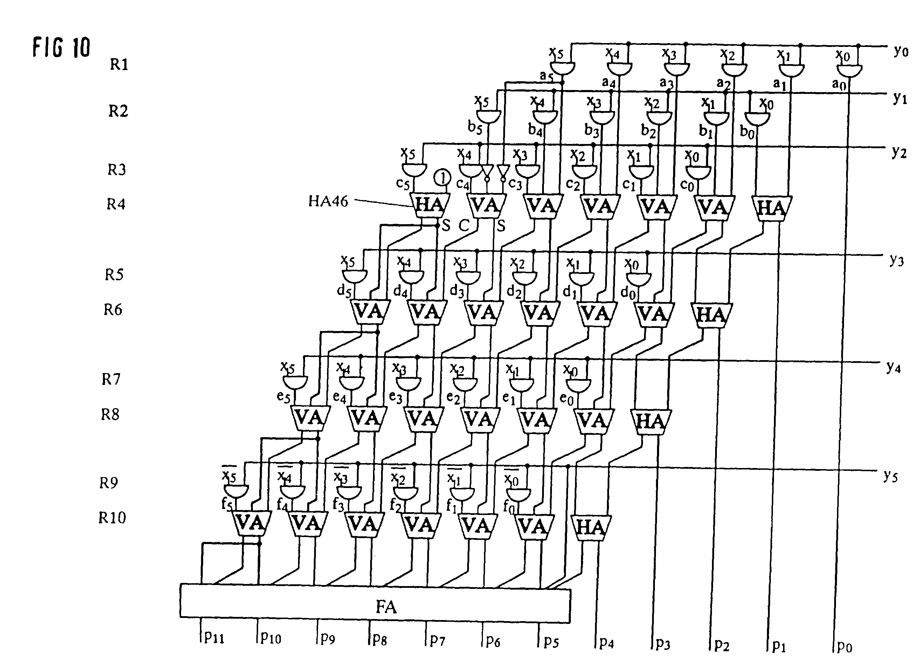

In dem in Figur 10 dargestellten Multiplizierer ist diese Vereinfachung in der ersten Addiererreihe R4 durchgeführt. Dem zweithöchstwertigen Volladdierer VA45 werden die Vorzeichenbits $a_5$ und $b_5$ invertiert zugeführt und der höchstwertige Volladdierer VA46 (Figur 9) ist bereits durch einen Halbaddierer HA46 ersetzt, dem außer dem Vorzeichenbit $c_5$ eine konstante Eins zugeführt ist.

Selbstverständlich kann auch beim höchstwertigen Volladdierer VA46 (Figur 9) bzw. beim Halbaddierer HA 46 (Fig. 10) eine Umformung entsprechend Formel (17) bzw. (18) durchgeführt werden. Diese führt jedoch gegenüber den im folgenden beschriebenen Maßnahmen zu keiner weiteren Schaltungsvereinfachung.

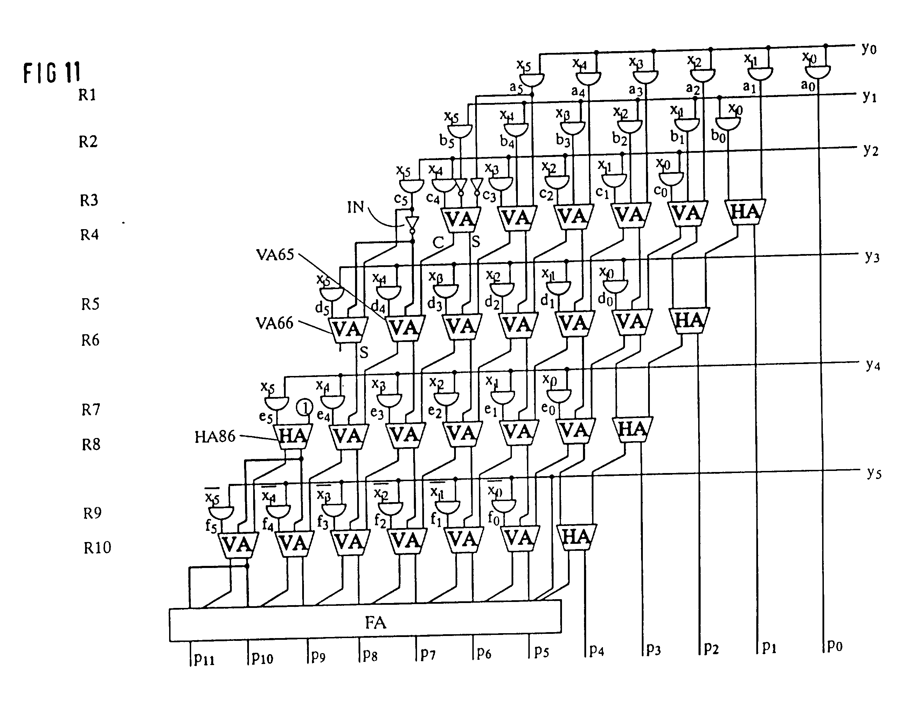

Entsprechend der logischen Funktion (13) eines Halbaddierers kann die Schaltungsanordnung nach Figur 10 weiter vereinfacht werden, indem zunächst der höchstwertige Halbaddierer HA46 durch einen Inverter ersetzt wird. Hierdurch erhält man Figur 11.

Den höchstwertigen Volladdierer VA66 der zweiten Addiererreihe R6 werden zwei zueinander invertierte Eingangssignale zugeführt. In einem dritten Schritt kann daher dieser Volladdierer - und die anderen höchstwertigen Volladdierer VA86 bis VAA6 (Figur 9) - der weiteren Addiererreihen entsprechend (14) ersetzt werden.

Da stets zwei zueinander invertierte Eingangswerte b und b zu verarbeiten sind, ist ein Halbaddierer ausreichend, dem außer einem variablen Eingangswert $c_m$ eine Eins zugeführt wird. In Figur 11 erfolgte diese Vereinfachung bisher nur bei einem Volladdierer VA86 (Figur 10), der durch einen Halbaddierer HA86 ersetzt wurde.

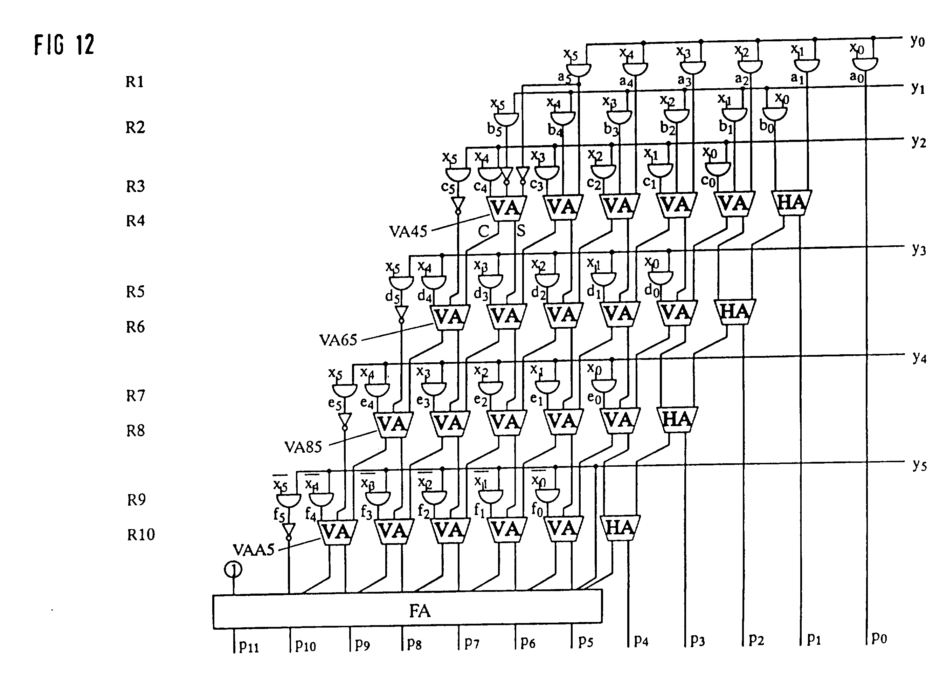

Auch die übrigen höchstwertigen Volladdierer können durch Halbaddierer ersetzt werden, denen eine konstante Eins (log. 1) zugeführt wird, und die Halbaddierer können wiederum durch einen Inverter ersetzt werden. Diese optimierte Schaltungsanordnung ist in Figur 12 dargestellt. Die höchstwertigen Volladdierer VA46, VA66, ... VAA6 aus Figur 9 sind überflüssig geworden.

Umformungen der Schaltung entsprechend den Boolschen Regeln sind selbstverständlich möglich. Beispielsweise kann die Reihenschaltung eines Gatters mit einem Inverter durch ein invertierendes Gatter ersetzt werden, die Funktion eines UND-Gatters durch ein ODER-Gatter nachgebildet werden.

Das beschriebene Prinzip der Vorzeichenbitergänzung kann für eine beliebige Anzahl von Bitstellen erweitert werden, wobei es besonders für Bitstellen interessant ist, bei denen mindestens zwei Vorzeichenbits verarbeitet werden.

Entsprechend (20) gilt:

(21)

$$
\begin{array}{cccc}
2^8 & 2^7 & 2^6 & 2^5
\end{array}
\qquad\qquad
\begin{array}{cccc}
2^8 & 2^7 & 2^6 & 2^5
\end{array}
$$

$$
\begin{array}{cccc}
+a_5 & +a_5 & +a_5 & +a_5 \\
+b_5 & +b_5 & +b_5 & +b_5 \\
+c_{y+3} & +c_{y+2} & +c_{y+1} & +c_y
\end{array}
\qquad \equiv \qquad
\begin{array}{cccc}
 & & & \overline{a}_5 \\
1 & 1 & 1 & +\overline{b}_5 \\
+c_{y+3} & +c_{y+2} & +c_{y+1} & +c_y
\end{array}
$$

Dies bedeutet schaltungsmäßig, daß nach dem Volladdierer, dem die Vorzeichenbits invertiert zugeführt werden, alle höherwertigeren Volladdierer durch Halbaddierer ersetzt werden können, denen jeweils außer einem c-Bit eine Eins zugeführt wird. Die Addition einer Eins bedeutet eine Invertierung des c-Bits; der Halbaddierer kann daher entsprechend Formel (13) durch einen Inverter ersetzt werden.

Es kann auch ein allgemeingültiger Algorithmus für die vereinfachte Vorzeichenbitergänzung abgeleitet werden. Eine Zweierkomplementzahl $X = X_k ... X_0$ mit der Wortbreite $k+1$ kann wie folgt dargestellt werden:

$$
(22) \quad X = -X_k \cdot 2^k + \sum_{i=0}^{k-1} X_i \cdot 2^i \qquad i = 0, 1, .....
$$

Bei einer Vorzeichenerweiterung um S Bits gilt für die Summe der Vorzeichenbits A und B:

(23)

$$
\sum AB = -a_k \cdot 2^{k+2S} + \sum_{i=k+S}^{k+2S-1} a_k \cdot 2^i \; - \; b_k \cdot 2^{k+2S} + \sum_{i=k+S}^{k+2S-1} b_k \cdot 2^i
$$

$$
= (a_k + b_k) \cdot (-2^{k+2S} + 2^{k+2S-1} + ... + 2^{k+S})
$$

$$
= (a_k + b_k) \cdot (-2^{k+2S} + \sum_{i=k+S}^{k+2S-1} 2^i)
$$

$$
\text{mit} \quad \sum_{i=k+S}^{k+2S-1} 2^i = 2^{k+2S} - 2^{k+S}
$$

$$
\Sigma AB = - (a_k + b_k) 2^{k+S}
$$

unter Addition von $- 2^{k+S} + 2^{k+S} \; (+) \; 2^{k+2S+1} = 0$,

$(+) =$ Modulo $2^{k+2S+1}$-Addition (übersteigt den maximalen Wert um 1)

$$\Sigma AB = -(a_k + b_k)2^{k+S} \,(+)\, 2^{k+2S+1} - 2^{k+S} + 2^{k+S}$$

$$\text{mit} \quad 2^{k+2S+1} - 2^{k+S} = \sum_{i=k+S}^{k+2S} 2^i$$

$$= -(a_k + b_k)2^{k+S} + \sum_{i=k+S}^{k+2S} 2^i + 2^{k+S}$$

$$= -(a_k + b_k)2^{k+S} + \sum_{i=k+S+1}^{k+2S} 2^i + 2^{k+s} + 2^{k+S}$$

$$\text{mit}(1 - a) = \overline{a}, \quad (1 - b) = \overline{b}$$

$$(24) \quad \Sigma AB = \sum_{i=k+S+1}^{k+2S} 2^i + (\overline{a}_k + \overline{b}_k)2^{k+S}$$

Bei den einzelnen Binärstellen muß bei einer Schaltungsrealisierung noch das jeweilige Partialproduktbit oder ein Carry-bit aus der vorhergehenden Addiererreihe hinzuaddiert werden.

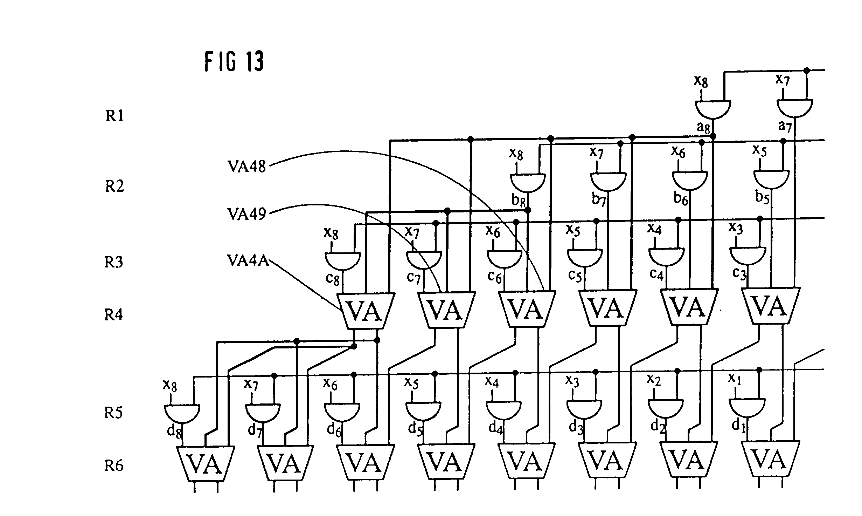

Ein Ausschnitt eines parallel arbeitenden Carry-Save-Multiplizierers mit einer Vorzeichenbitergänzung von zwei Bits zwischen zwei aufeinanderfolgenden Addiererreihen ist in Figur 13 dargestellt. Beide Ausgangswerte des höchstwertigen Volladdierers VA4A müssen ergänzt werden.

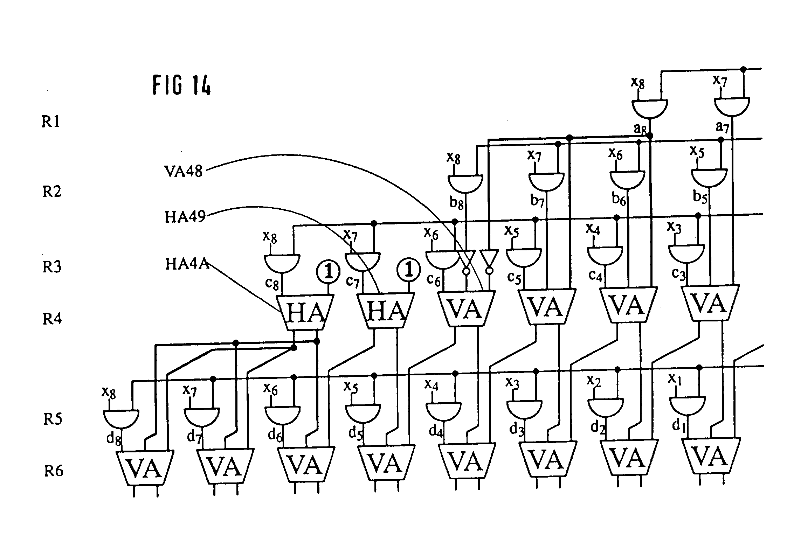

Entsprechend der Tabelle (21) bzw. nach Formel (24) wird zunächst die erste Addiererreihe R4 umgestaltet. Figur 14 zeigt die Invertierung der Eingangswerte für den Volladdierer VA48 sowie die Umformung der beiden höchstwertigen Volladdierer in Halbaddierer HA49 und HA4A.

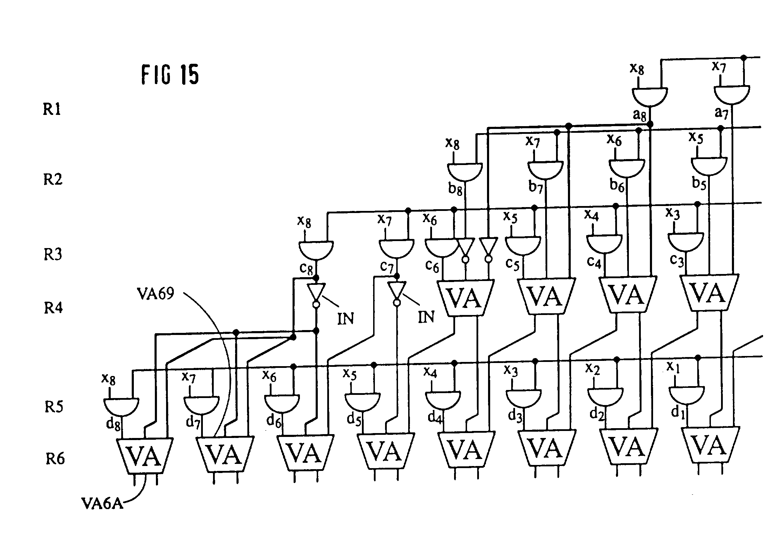

In einem zweiten Schritt werden die Halbaddierer HA49 und HA4A gemäß Formel (13) jeweils durch einen Inverter ersetzt. Die erhaltene Schaltung ist in Figur 15 dargestellt.

In einem dritten Schritt werden die beiden höchstwertigen Volladdierer VA6A, VA69 der folgenden Addiererreihe (n) R6 gemäß Formel (14) durch Halbaddierer HA6A, HA69 ersetzt, die wieder als Inverter ausgebildet sind (die Reihenfolge des zweiten und dritten Schrittes ist beliebig).

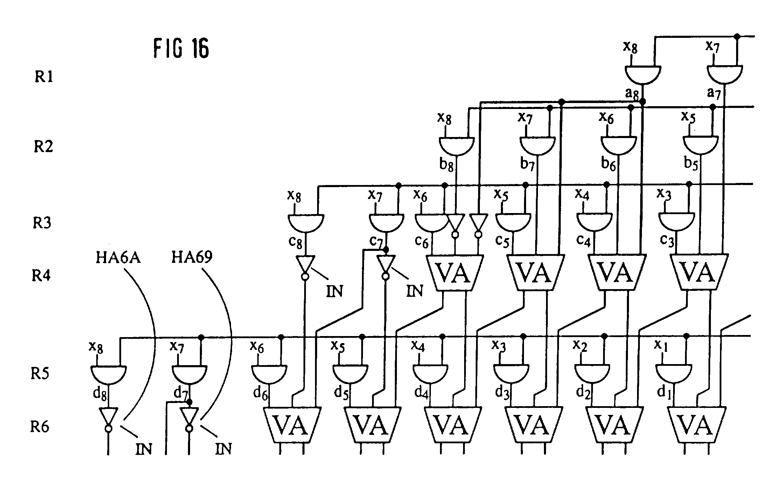

Figur 16 zeigt die optimierte Schaltungsanordnung. Diese Vorgehensweise kann bei beliebig großen Vorzeichenbitergänzungen angewendet werden.

Die Erfindung wird nun für einen Multiplizierer in Carry-Ripple-Technik erläutert.

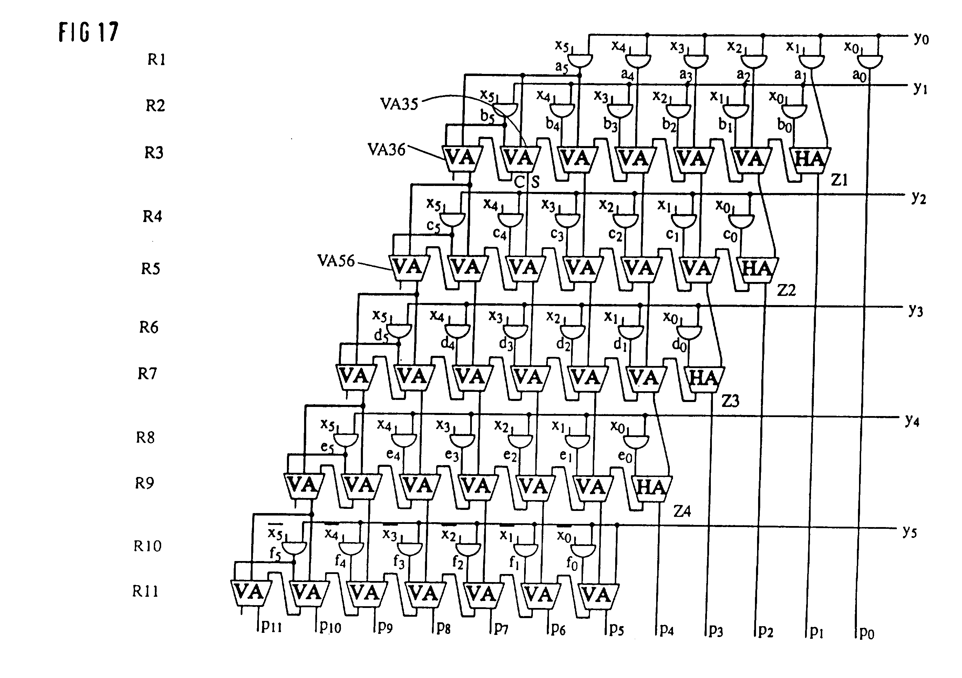

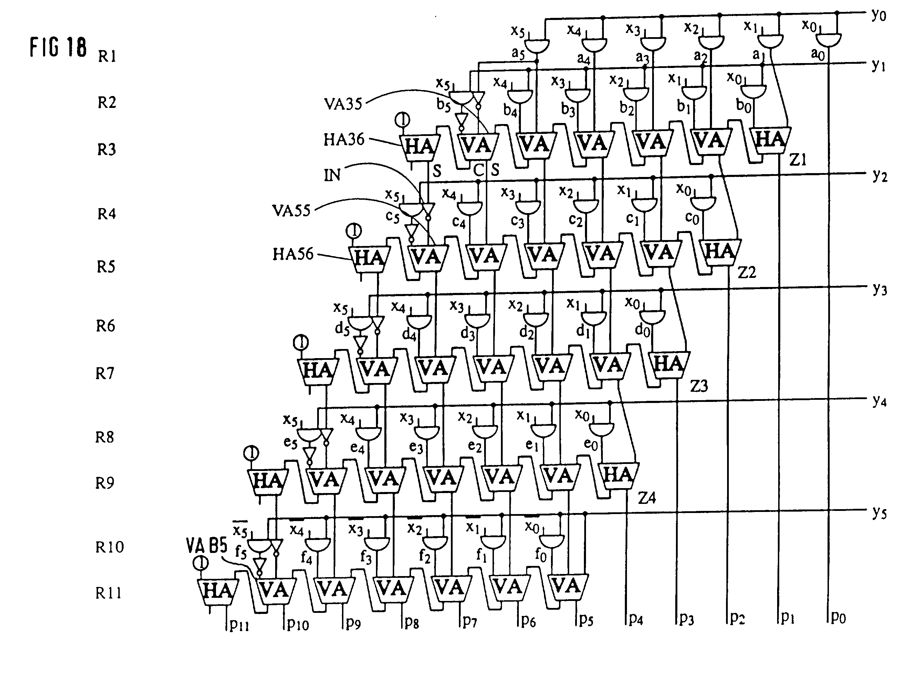

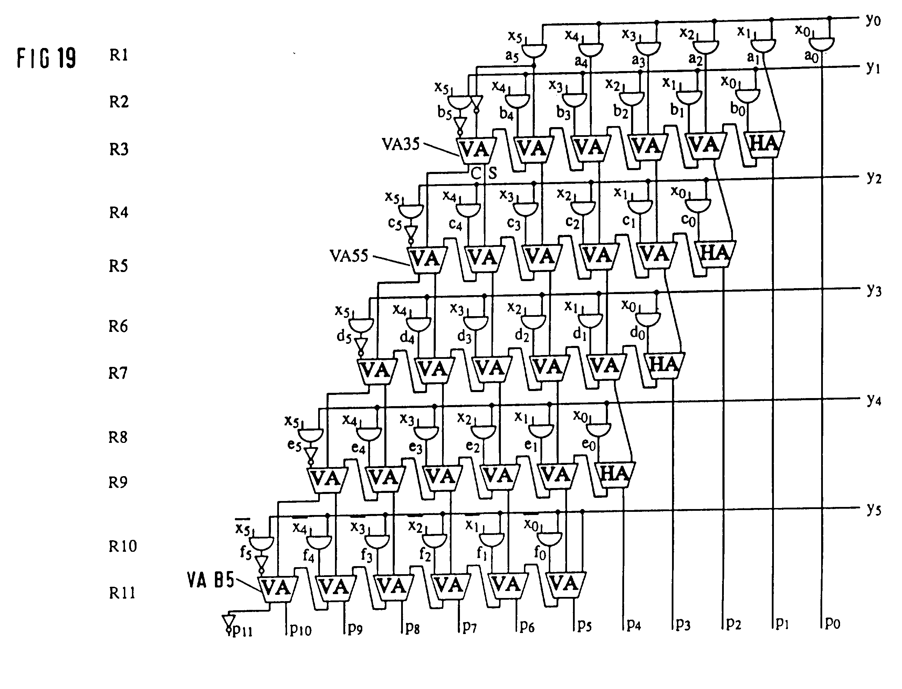

In Figur 17 ist ein bekannter Feldmultiplizierer in Carry-Ripple-Technik dargestellt. In Multipliziererreihen R1, R2, R4, R6, R8 und R10 werden Partialprodukte $a_5....a_0$, $b_5....b_0$, ..., $f_5....f_0$ durch Multiplikation des Multiplikanden $x = x_5...x_0$ mit jeweils einem Bit des Multiplikators $y = y_5...y_0$ gebildet. Die ersten beiden Partialprodukte $a_5....a_0$, $b_5....b_0$ werden in einer ersten Addiererreihe R3 zu einer 'Zwischensumme' Z1 zusammengefaßt, die an den Summenausgängen "S" der Addierer VA, HA anliegt (die Summenausgänge S und die Carryausgänge C sind in Figur 17 (und Figur 18 und 19) nur beim Volladdierer VA35 aus Gründen der Übersichtlichkeit eingezeichnet).

In weiteren Addiererreihen R5, R7, R9 und R11 wird jeweils ein weiteres Partialprodukt $c_5...c_0$, ..., $f_5....f_0$ hinzuaddiert.

Die 'Verdrahtung' des Vorzeichenbits ist mit breiteren Linien dargestellt. In der ersten Addiererreihe R3 ist das Vorzeichenbit $a_5$ des ersten Partialproduktes $a_5....a_0$ an die drei höchstwertigen Volladdierer VA34 ..VA36 geführt, und das Vorzeichenbit $b_5$ des zweiten Partialproduktes $b_5....b_0$ ist an die beiden höchstwertigen Volladdierer VA35 und VA36 geführt.

Bei den nächsten Addiererreihen R5 ....R11 ist zu der gebildeten Zwischensumme jeweils nur die Ergänzung um ein Vorzeichenbit erforderlich.

Das letzte Partialprodukt $f_5....f_0$ wird durch Multiplikation des Zweierkomplements des Multiplikanden x mit dem Vorzeichenbit $y_k$ des Multiplikators y gebildet und zur letzten Zwischensumme Z4 hinzuaddiert um das Endprodukt

$p_{11}..p_0$ zu erhalten.

Im Multiplizierer wird das Produkt bei einer Darstellung der negativen Zahlen im Zweierkomplement entsprechend (16) errechnet.

Der bereits abgeleitete Algorithmus für die Vorzeichenerweiterung gilt auch für diesen Multiplizierertyp. Im Bereich der höchstwertigen Volladdierer VA36, VA 56, .. soll die Schaltung entsprechend dem bereits beschriebenen Vorgehen vereinfacht werden.

In einem ersten Schritt wird die Vorzeichenergänzung für ein Vorzeichenbit $a_k$ (ab einer Wertigkeit $\geq 2^k$) durch Gleichung (17) realisiert.

In der angegebenen Schaltung wird diese Vorzeichenergänzung bei den höchstwertigen Volladdierern VA36, VA35 der Addiererreihe R3 durchgeführt. Unter Vernachlässigung der niederwertigeren Bits gilt:

$$(25) \qquad a_5 \cdot 2^7 + a_5 \cdot 2^6 = 2^7 + \bar{a}_5 \cdot 2^6 + 2^6$$

und

$$(26) \qquad b_5 \cdot 2^7 + b_5 \cdot 2^6 = 2^7 + \bar{b}_5 \cdot 2^6 + 2^6 \cdot$$

hierbei sind $\bar{a}_5$, $\bar{b}_5$ invertierte Vorzeichenbits

Aus den durch Umformung erhaltenen Bits wird - entsprechend den Vorzeichenbits - die Summe gebildet.

Die Addition dieser Bits - ergänzt um Carrybits $C_6$ und $C_5$ - läßt sich in Tabellenform darstellen:

$$(27)$$

$$
\begin{array}{cc c cc c cc}
2^7 & 2^6 & & 2^7 & 2^6 & & 2^7 & 2^6 \\[6pt]
a_5 & a_5 & & 1 & (\bar{a}_5 + 1) & & & \bar{a}_5 \\
+b_5 & +b_5 & \equiv & +1 & (\bar{b}_5 + 1) & \equiv & +1 & +\bar{b}_5 \\
+C_6 & +C_5 & & +C_6 & +\ C_5 & & +C_6 & +C_5
\end{array}
$$

Die mittleren beiden Spalten sind entsprechend den Formeln (25) und (26) umgeformt. Bei den rechten beiden Spalten wurde die Addition der Einsen bereits durchgeführt. Die in diesen Spalten dargestellte Umformung ist so zu interpretieren, daß die Summe durch Addition der invertierten Vorzeichenbits der Wertigkeit $2^6$ und des Carry-Bits $c_5$ des dritten Partialproduktes sowie durch Addition einer logischen 1 und des Vorzeichenbits $c_5$ errechnet wird. Die Addition einer Eins bedeutet eine Invertierung des Carrybits; der Halbaddierer kann daher durch einen Inverter ersetzt werden.

In Figur 18, die den erfindungsgemäßen Multiplizierer zeigt, ist diese Vereinfachung durchgeführt. Die allen zweithöchstwertigen Volladdierern VA35 bis VAB5 zugeführten Vorzeichenbits sind invertiert und die höchstwertigen Volladdierer sind jeweils durch einen Halbaddierer HA36, HA56 .... ersetzt, dem eine konstante Eins außer dem Carry-Bit zugeführt ist. Die von den Halbaddierern am Summenausgang ausgegebenen Bits S werden - bis auf das höchstwertige 'Summenbit' $P_{11}$ überhaupt - vor der Zusammenfassung mit dem Vorzeichenbit des nächsten Partialproduktes wieder in derselben Weise invertiert.

Entsprechend der logischen Funktion (13) eines Halbaddierers kann die Schaltungsanordnung weiter vereinfacht werden, indem jeweils die Reihenschaltung eines Halbaddierers mit einem Inverter (Figur 18) entfällt und durch eine direkte Verbindung ersetzt wird (ebenso können auch nur die Inverter eingespart werden, indem den Halbaddierern anstelle einer 1 eine logische 0 zugeführt wird).

Weitere Umformungen der Schaltung sind entsprechend den 'Boolschen Regeln' selbstverständlich möglich.

In Figur 19 ist ein optimierter Feldmultiplizierer dargestellt, bei dem in jeder Addiererreihe ein Volladdierer gegenüber Figur 17 bzw. ein Halbaddierer gegenüber Figur 18 eingespart wurde.

Das am Carry-Ausgang des Volladdierers VAB5 ausgegebene Bit muß invertiert werden.

Bei jeder Vorzeichenbits verarbeitender Binärstelle muß bei einer Schaltungsrealisierung in Carry-Ripple-Technik außer den invertierten Vorzeichenbits oder dem festen Binärwert (log. Eins) jeweils ein Carrybit des niederwertigeren Volladdierers hinzuaddiert werden.

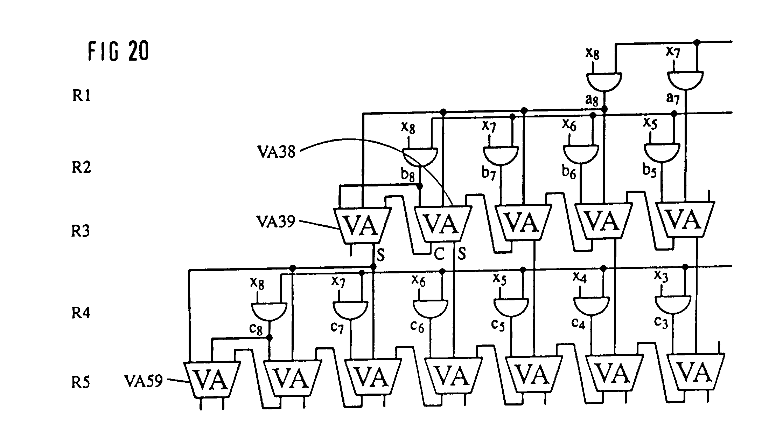

Einen Ausschnitt eines Carry-Ripple-Multiplizierers mit einer Vorzeichenergänzung ist in Figur 20 dargestellt.

Nach Formel (24) bzw. Tabelle (27) wird zunächst die erste Addiererreihe R3 umgestaltet, wobei mit dem Volladdierer VA38 begonnen wird, dem beide Vorzeichenbits zugeführt werden.

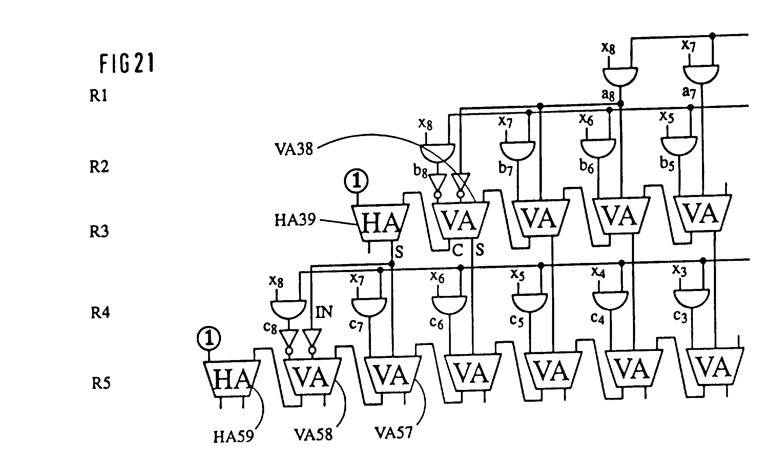

Anschließend folgt der Ersatz des höchstwertigen Volladdierers VA39 (Figur 20) gemäß Tabelle (27) durch einen Halbaddierer HA39, dem eine Eins zugeführt wird (Figur 21) (Die geänderte Schaltung entspricht Figur 18, da ebenfalls erst jeweils dem zweithöchstwertigen Addierer beide Vorzeichenbits zugeführt werden).

Die durchgeführte Schaltungsänderung wird nun für die nächste Addierrerreihe durch Invertieren der Vorzeichenbits und Ersatz des höchstwertigen Volladdierers VA59 durch einen Halbaddierer HA59 wiederholt. Den höchstwertigen Halbaddierern werden jeweils wieder außer einem Carrybit eine Eins zugeführt.

Die umgeformten Addiererreihen sind in Figur 21 dargestellt.

Der höchstwertige Halbaddierer jeder Addiererreihe kann wieder gemäß Formel (18) durch einen Inverter ersetzt werden. Dann entfällt der bisher vorgesehene Inverter IN , da durch den Halbaddierer und den Inverter das Vorzeichenbit zweimal invertiert wird; statt dessen ist eine direkte Verbindung vorgesehen (z.B. Halbaddierer HA39 und Inverter IN in der Verbindung zwischen dem Carryausgang des Volladdierers VA38 und einem Eingang des höchstwertigen Volladdierers der nächsten Addiererreihe). Ein zusätzlicher Inverter ist dagegen zwischen dem Carryausgang des Volladdierers VA38 und einem Eingang des Volladdierers VA57 erforderlich usw.

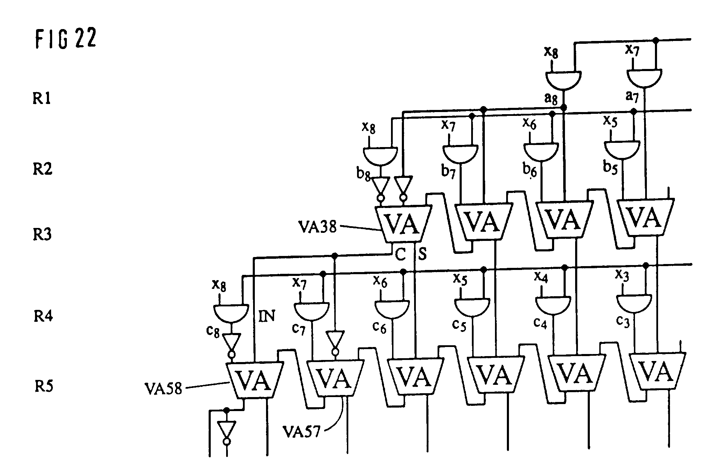

Figur 22 zeigt die optimierte Schaltungsanordnung; die Vereinfachungen bleiben bei beliebig großen Vorzeichenergänzungen gleich.

Natürlich sind zahlreiche 'Boolsche Umformungen' möglich, angefangen mit dem Ersatz der Reihenschaltung eines UND-Gatters und eines Inverters durch ein NAND-Gatter, dessen Ersatz durch eine äquivalente Schaltung mit ODER-Funktionen usw. bis zur Verarbeitung invertierter Signale.

Bei allen Multipliziererarten ist bekannt oder denkbar, mehrere Partialproduktzwischensummen parallel zu errechnen, die dann zusammengefaßt werden.

## Patentansprüche

1. Multiplizierer mit einem matrixförmigen Schaltungsaufbau von mehregen Addiererreihen, bei denen eine Ergänzung der Vorzeichenbits ($a_5$,$b_5$;$a_8$,$b_8$) von Partialprodukten oder deren Zwischensummen um mindestens eine Binärstelle erfolgt, indem das zu ergänzende Vorzeichenbit ($a_5$, $b_5$; $a_8$, $b_8$) invertiert einem Addierer (VA) der nächsten Addiererreihe (R3) zugeführt wird und in diesem Addierer (VA) zusätzlich eine Eins hinzuaddiert wird, und daß in den höherwertigeren Addierern (HA) derselben Addiererreihe (R3) jeweils anstelle des Vorzeichenbits ($a_8$) eine konstante Eins hinzuaddiert wird,
**dadurch gekennzeichnet,**
daß dem niederwertigsten Volladdierer (VA45; VA48) der ersten Addiererreihe (R4, R3), der zwei Vorzeichenbits ($a_5$, $b_5$; $a_8$, $b_8$) von zwei Partialprodukten ($a_5$ ... $a_0$, $b_5$ ... $b_0$; $a_8$ ... $a_0$, $b_8$ ... $b_0$ ) zusammenfaßt, diese Vorzeichenbits ($\bar{a}_5$, $\bar{b}_5$; $\bar{a}_8$, $\bar{b}_8$) invertiert zugeführt werden und daß der höchstwertige Addierer derselben Addiererreihe (R4; R3) als Halbaddierer (HA46; HA4A) ausgebildet ist.

2. Multiplizierer nach Anspruch 1,
**dadurch gekennzeichnet,** daß er in Carry-Save-Technik mit mindestens einer Addiererreihe (R4, R6, R8,...) ausgeführt ist, bei der eine Vorzeichenbitergänzung ($a_5$, $b_5$, $c_5$,...) eines Partialproduktes ($a_5$ ... $a_0$, $b_5$ ... $b_0$) oder eines Zwischenergebnisses um jeweils mindestens eine Binärstelle erfolgt.

3. Multiplizierer nach Anspruch 2,
**dadurch gekennzeichnet,**
daß durch die erste Addiererreihe (R4) drei Partialprodukte ($a_5$ ... $a_0$, $b_5$ ... $b_0$, $c_5$ ... $c_0$) zusammengefaßt werden.

4. Multiplizierer nach Anspruch 2 oder 3,
**dadurch gekennzeichnet,**
daß die höchstwertigen Addierer von weiteren Addiererreihen (R6, R8, R10) als Halbaddierer (...,HA86, ...) ausgebildet sind, denen jeweils außer dem Vorzeichenbit (...,$e_5$, ...) eines Partialproduktes eine Eins zugeführt wird.

5. Multiplizierer nach einem der Ansprüche 2 bis 4,
**dadurch gekennzeichnet,**

daß bei einer mehrere Bits umfassenden Vorzeichenbitergänzung dem niederwertigsten Volladdierer (VA48) der ersten Addiererreihe (R4), der zwei Vorzeichenbits ($a_8$, $b_8$) zusammenfaßt, diese als invertierte Vorzeichenbits ($\bar{a}_8$, $\bar{b}_8$) zugeführt werden und

daß die höherwertigeren Addierer dieser Addiererreihe (R4) als Halbaddierer (HA49, HA4A) ausgebildet sind, denen jeweils außer einem der höherwertigen Bits ($c_7$, $c_8$) eines Partialproduktes ($c_8$....$c_0$) eine Eins zugeführt wird.

6. Multiplizierer nach Anspruch 5,
   **dadurch gekennzeichnet,**
   daß die entsprechenden höchstwertigen Addierer der folgenden Addiererreihen (R6, ...) als Halbaddierer (HA6A, HA69) ausgebildet sind, denen jeweils eines der höchstwertigen Bits ($d_8$, $d_7$) eines weiteren Partialproduktes ($d_8$.... $d_0$) und eine Eins zugeführt ist.

7. Multiplizierer nach Anspruch 1,
   **dadurch gekennzeichnet,**
   daß er in Carry-Ripple-Technik mit mindestens einer Addiererreihe (R3, R5, R7,...) ausgeführt ist, bei der eine Vorzeichenbitergänzung ($a_5$, $b_5$, $c_5$,...) eines Partialproduktes ($a_5$ ... $a_0$, $b_5$ ... $b_0$) oder einer Zwischensumme (Z1, Z2, ...) um jeweils mindestens eine Binärstelle erfolgt.

8. Multiplizierer nach Anspruch 7,
   **dadurch gekennzeichnet,**
   daß der höchstwertige Addierer jeder Addiererreihe als Halbaddierer (HA36, HA56) ausgebildet ist.

9. Multiplizierer nach Anspruch 7 oder 8,
   **dadurch gekennzeichnet,**
   daß der Summenausgang (S)des jeweils höchstwertigen Halbaddierers (HA36, ...) einer Addiererreihe (R3, ...) über einen Inverter (IN) mit dem zweithöchstwertigen Addierer, einem Volladdierer (VA55, ... ), der nächsten Addiererreihe (R5, ...) verbunden ist oder daß der Halbaddierer (HA36, ...) mit einem invertierenden Summenausgang vorgesehen ist.

10. Multiplizierer nach Anspruch 7, 8 oder 9,
    **dadurch gekennzeichnet,**
    daß bei einer mehrere Bits umfassenden Vorzeichenergänzung jeweils der Summenausgang (S) der höchstwertigen Halbaddierer (HA39, ...) einer Addiererreihe (R3, ...) über jeweils einen Inverter (IN) mit dem zweithöchstwertigen Addierer, einem Volladdierer (VA58 ), und direkt mit dem Eingang mindestens eines niederwertigeren Volladdierers (VA57) der folgenden Addiererreihe (R5, ...) verbunden ist.

11. Multiplizierer nach Anspruch 9 oder 10,
    **dadurch gekennzeichnet,**
    daß jeweils der höchstwertige Halbaddierer (HA36; HA39, ....) und der mit diesem in Reihe geschaltete Inverter (IN) durch eine direkte Verbindung des Carryausgangs (C) des zweithöchstwertigen Volladdierers (VA35; VA38, ...) derselben Addiererreihe (R3, ...) mit einem Eingang des zweithöchstwertigen Volladdierers (VA55; VA58, ...) der nächsten Addiererreihe (R5, ...) ersetzt wird.

12. Multiplizierer nach einem der vorhergehenden Ansprüche,
    **dadurch gekennzeichnet,**
    daß ein Halbaddierer (HA46 HA86, ..; HA4A, HA49, HA6A, HA69), dem jeweils außer einem zu verarbeitenden Datenbit eine Eins zugeführt wird, als Inverter (IN) ausgebildet ist.

13. Multiplizierer nach einem der vorhergehenden Ansprüche,
    **dadurch gekennzeichnet,**
    daß anstelle eines Volladdierers (VA), dem zwei zueinander inverse Eingangssignale (b, $\bar{b}$) zugeführt werden, ein Halbaddierer (HA) oder ein Inverter vorgesehen ist.

14. Multiplizierer nach Anspruch 12,
    dadurch gekennzeichnet,
    daß der Carryausgang (C) des zweithöchstwertigen Volladdierers (VA38, ..) einer Addiererreihe (R3, ...) zusätzlich über einen einen Halbaddierer (HA39) ersetzenden Inverter mit jeweils einem Eingang mindestens eines niederwertigeren Volladdierers (VA7, ...) der folgenden Addiererreihe (R5, ..) verbunden ist.

15. Multiplizierer nach einem der vorhergehenden Ansprüche,
**dadurch gekennzeichnet,**
daß das höchstwertige Partialprodukt ($f_5$...$f_0$) durch Invertieren des Multiplikanden (x) und einer Multiplikation mit dem Vorzeichenbit ($y_5$) des Multiplikators (y) sowie der Addition seines Vorzeichenbits ($y_5$) errechnet wird.

16. Multiplizierer nach einem der vorhergehenden Ansprüche,
**dadurch gekennzeichnet,**
daß der jeweils höchstwertige Addierer (VA66, HA46) einer Addiererreihe (R3, R5, R7), dem außer einem zu verarbeitenden Datenbit ($d_5$,$c_5$) eine Eins zugeführt wird, durch einen Inverter ersetzt wird oder daß zusätzlich ein invertiertes Bit (z.B. $\bar{b}_8$) an den kaskadierten Addierer (VA) der folgenden Addiererreihe (z.B. R5) geliefert wird.

17. Multiplizierer nach einem der vorhergehenden Ansprüche,
**dadurch gekennzeichnet,**
daß seine Schaltungsanordnung 'Boolsche Umformungen' umfaßt.

18. Rechenschaltung nach einem der vorhergehenden Ansprüche,
**dadurch gekennzeichnet,**
daß anstelle der Partialprodukte ($a_5$ ... $a_0$, $b_5$ ... $b_0$,...$a_8$...., $b_8$....) Summanden addiert werden, so daß die Schaltung als Addierer arbeitet.

**Claims**

1. Multiplier having a matrix-shaped circuit arrangement of a plurality of adder rows in which the sign bits ($a_5$, $b_5$; $a_8$, $b_8$) of partial products or their subtotals are supplemented by at least one binary digit, by the sign bit ($a_5$, $b_5$; $a_8$, $b_8$) to be supplemented being fed inverted to an adder (VA) of the next adder row (R3) and in addition a one being added in this adder (VA), and in that instead of the sign bit ($a_8$) a constant one is added in each case in the higher-order adders (HA) of the same adder row (R3), characterized in that the lowest-order full adder (VA45; VA48) of the first adder row (R4, R3), which combines two sign bits ($a_5$, $b_5$; $a_8$, $b_8$) of two partial products ($a_5$ ... $a_0$, $b_5$ ... $b_0$; $a_8$ ... $a_0$, $b_8$ ... $b_0$), is fed said sign bits ($\bar{a}_5$, $\bar{b}_5$; $\bar{a}_8$, $\bar{b}_8$) inverted and in that the highest-order adder of the same adder row (R4; R3) is constructed as a half-adder (HA46; HA4A).

2. Multiplier according to Claim 1, characterized in that it is designed using carry-save technology, having at least one adder row (R4, R6, R8,...) in which the sign bit ($a_5$, $b_5$, $c_5$, ...) of a partial product ($a_5$ ... $a_0$, $b_5$ ... $b_0$) or of an intermediate result is supplemented by in each case by at least one binary digit.

3. Multiplier according to Claim 2, characterized in that three partial products ($a_5$ ... $a_0$, $b_5$ ... $b_0$, $c_5$ ... $c_0$) are combined by the first adder row (R4).

4. Multiplier according to Claim 2 or 3, characterized in that the highest-order adders of further adder rows (R6, R8, R10) are constructed as half-adders (...,HA86, ....) to which in each case a one is fed in addition to the sign bit (..., $e_5$, ...) of a partial product.

5. Multiplier according to one of Claims 2 to 4, characterized in that in the case of a sign bit supplementation comprising a plurality of bits the lowest-order full adder (VA48) of the first adder row (R4), which combines two sign bits ($a_8$, $b_8$), is fed the latter as inverted sign bits ($\bar{a}_8$, $\bar{b}_8$), and in that the higher-order adders of this adder row (R4) are constructed as half-adders (HA49, HA4A) to which in each case a one is fed in addition to one of the higher-order bits ($c_7$, $c_8$) of a partial product ($c_5$...$c_0$).

6. Multiplier according to Claim 5, characterized in that the corresponding highest-order adders of the following adder rows (R6, ...) are constructed as half-adders (HA6A, HA69) to which in each case one of the highest-order bits ($d_8$, $d_7$) of a further partial product ($d_8$....$d_0$) and a one are fed.

7. Multiplier according to Claim 1, characterized in that it is designed using carry-ripple technology with at least one adder row (R3, R5, R7,...) in which the sign bit ($a_5$, $b_5$, $c_5$, ...) of a partial product ($a_5$ ... $a_0$, $b_5$ ... $b_0$) or of a subtotal (Z1, Z2, ...) is supplemented by in each case at least one binary digit.

8. Multiplier according to Claim 7, characterized in that the highest-order adder of each adder row is constructed as a half-adder (HA36, HA56).

9. Multiplier according to Claim 7 or 8, characterized in that the sum output (S) of the respectively highest-order half-adder (HA36, ...) of an adder row (R3, ...) is connected via an inverter (IN) to the second-highest-order adder, a full adder (VA55, ...), of the next adder row (R5, ...), or in that the half-adder (HA36, ...) is provided with an inverting sum output.

10. Multiplier according to Claim 7, 8 or 9, characterized in that in the case of a sign bit supplementation comprising a plurality of bits, the sum output (S) of the highest-order half-adder (HA39, ...) of an adder row (R3, ...) is respectively connected via respectively one inverter (IN) to the second-highest-order adder, a full adder (VA58, ....), and directly to the input of at least one lower-order full adder (VA57) of the following adder row (R5, ...).

11. Multiplier according to Claim 9 or 10, characterized in that the highest-order half-adder (HA36; HA39, ....) and the inverter (IN) connected in series therewith is respectively replaced by a direct connection of the carry output (C) of the second-highest-order full adder (VA35; VA38, ...) of the same adder row (R3, ...) to an input of the second-highest-order full adder (VA55; VA58, ...) of the next adder row (R5 ...).

12. Multiplier according to one of the preceding claims, characterized in that a half-adder (HA46, ....HA86, ..; HA4A, HA49, HA6A, HA69) to which in each case a one is fed in addition to a data bit to be processed is constructed as an inverter (IN).

13. Multiplier according to one of the preceding claims, characterized in that a half-adder (HA) or an inverter is provided instead of a full adder (VA) to which two mutually inverse input signals $(b, \bar{b})$ are fed.

14. Multiplier according to Claim 12, characterized in that the carry output (C) of the second-highest-order full adder (VA38, ..) of an adder row (R3, ...) is additionally connected via an inverter, which replaces a half-adder (HA39), to in each case one input of at least one lower-order full adder (VA57, ...) of the following adder row (R5, ..).

15. Multiplier according to one of the preceding claims, characterized in that the highest-order partial product $(f_5 \,...\, f_0)$ is calculated by inverting the multiplicand (x) and a multiplication by the sign bit $(y_5)$ of the multiplier factor (y) as well as the addition of its sign bit $(y_5)$.

16. Multiplier according to one of the preceding claims, characterized in that the respectively highest-order adder (VA66, HA46) of an adder row (R3, R5, R7), to which a one is fed in addition to a data bit $(d_5, c_5)$ to be processed, is replaced by an inverter or in that in addition an inverted bit (for example $\bar{b}_8$) is supplied to the cascaded adder (VA) of the following adder row (for example R5).

17. Multiplier according to one of the preceding claims, characterized in that its circuit arrangement comprises 'Boolean transformations'.

18. Computing circuit according to one of the preceding claims, characterized in that summands are added instead of the partial products $(a_5 \,...\, a_0, b_5 \,...\, b_0, ...a_8..., b_8....)$, with the result that the circuit works as an adder.


**Revendications**

1. Multiplicateur ayant une structure de circuit en forme de matrice de plusieurs rangées d'additionneurs dans lesquelles il s'effectue une extension des bits de signe $(a_5, b_5 ; a_8, b_8)$ de produits partiels ou de leurs sommes intermédiaires, d'au moins une position binaire,

   le bit de signe à compléter $(a_5, b_5 ; a_8, b_8)$ étant envoyé inversé à un additionneur (VA) de la rangée d'additionneurs suivante (R3) et un 1 étant additionné en plus dans cet additionneur (VA), et
   dans les additionneurs de poids supérieur (HA) de la même rangée d'additionneurs (R3), un 1 constant étant à chaque fois additionné à la place du bit de signe $(a_8)$,

   caractérisé par le fait que

   l'additionneur complet de poids minimal (VA45 ; VA48) de la première rangée d'additionneurs (R4, R3), qui regroupe deux bits de signe $(a_5, b_5 ; a_8, b_8)$ de deux produits partiels $(a_5 ... a_0, b_5 ... b_0 ; a_8 ... a_0, b_8 ... b_0)$ reçoit ces bits de signe inversés $(\overline{a}_5, \overline{b}_5 ; \overline{a}_8, \overline{b}_8)$ et

l'additionneur de poids le plus grand de la même rangée d'additionneurs (R4 ; R3) ...) est conçu sous forme de semi-additionneur (HA46 ; HA4A).

2. Multiplicateur selon la revendication 1,
caractérisé par le fait qu'il est conçu selon la technique sans propagation de retenue avec au moins une rangée d'additionneurs (R4, R6, R8, ...) dans laquelle s'effectue une extension de bit de signe $(a_5, b_5, c_5, ...)$ d'un produit partiel $(a_5 ... a_0, b_5 ... b_0)$ ou d'un résultat intermédiaire, à chaque fois d'au moins une position binaire.

3. Multiplicateur selon la revendication 2,
caractérisé par le fait que trois produits partiels $(a_5 ... a_0, b_5 ... b_0, c_5 ... c_0)$ sont regroupés par la première rangée d'additionneurs (R4).

4. Multiplicateur selon la revendication 2 ou 3,
caractérisé par le fait que les additionneurs de poids le plus grand d'autres rangées d'additionneurs (R6, R8, R10) sont conçus sous forme de semi-additionneurs (..., HA86 ...) qui reçoivent à chaque fois un 1 outre le bit de signe $(..., e_5, ...)$ d'un produit partiel.

5. Multiplicateur selon l'une des revendications 2 à 4,
caractérisé par le fait que

pour une extension de bit de signe comprenant plusieurs bits, l'additionneur complet de poids minimal (VA48) de la première rangée d'additionneurs (R4), qui regroupe deux bits de signe $(\overline{a}_8, \overline{b}_8)$, reçoit ceux-ci sous forme de bits de signe inversés $(a_8, b_8)$ et

les additionneurs de poids supérieur de cette rangée d'additionneurs (R4) sont conçus sous forme de semi-additionneurs (HA49, HA4A) qui reçoivent à chaque fois un 1 outre un des bits de poids supérieur $(c_7, c_8)$ d'un produit partiel $(c_8 ... c_0)$.

6. Multiplicateur selon la revendication 5,
caractérisé par le fait que les additionneurs de poids le plus grand correspondants des rangées d'additionneurs suivantes (R6, ...) sont conçus sous forme de semi-additionneurs (HA6A, HA69) qui reçoivent à chaque fois un des bits de poids le plus grand $(d_8, d_7)$ d'un autre produit partiel $(d_8 ... d_0)$ et un 1.

7. Multiplicateur selon la revendication 1,
caractérisé par le fait qu'il est conçu selon la technique à report par vague avec au moins une rangée d'additionneurs (R3, R5, R7, ...) dans laquelle s'effectue une extension de bit de signe $(a_5, b_5, c_5, ...)$ d'un produit partiel $(a_5 ... a_0, b_5 ... b_0)$ ou d'une somme intermédiaire (Z1, Z2, ...), à chaque fois d'au moins une position binaire.

8. Multiplicateur selon la revendication 7,
caractérisé par le fait que l'additionneur de poids le plus grand de chaque rangée d'additionneurs est conçu sous forme de semi-additionneur (HA36, HA56).

9. Multiplicateur selon la revendication 7 ou 8,
caractérisé par le fait que la sortie de somme (S) du semi-additionneur de poids le plus grand (HA36, ...) d'une rangée d'additionneurs (R3 ...) est reliée par l'intermédiaire d'un inverseur (IN) à l'additionneur de second poids le plus grand, un additionneur complet (VA55, ...), de la rangée d'additionneurs suivante (R5, ...) ou alors le semi-additionneur (HA36, ...) est prévu avec une sortie de somme inverseuse.

10. Multiplicateur selon la revendication 7, 8 ou 9,
caractérisé par le fait que, pour une extension de bit de signe comprenant plusieurs bits, à chaque fois la sortie de somme (S) des semi-additionneurs de poids le plus grand (HA39, ...) d'une rangée d'additionneurs (R3, ...) est reliée par l'intermédiaire d'un inverseur (IN) à l'additionneur de second poids le plus grand, un additionneur complet (VA58, ...), et directement à l'entrée d'au moins un additionneur complet de poids inférieur (VA57) de la rangée d'additionneur suivante (R5, ...).

11. Multiplicateur selon la revendication 9 ou 10,
caractérisé par le fait que, à chaque fois, le semi-additionneur de poids le plus grand (HA36 ; HA39, ...) et l'inverseur (IN) branché en série avec celui-ci sont remplacés par une liaison directe de la sortie de retenue (C) de l'additionneur complet de poids le plus grand (VA35 ; VA38, ...) de la même rangée d'additionneurs (R3, ...) avec une entrée de l'additionneur complet de second poids le plus grand (VA55 ; VA58, ...) de la rangée d'additionneurs suivante (R5, ...).

**12.** Multiplicateur selon l'une des revendications précédentes,
caractérisé par le fait qu'un semi-additionneur (HA46, ..., HA86, ... ; HA4A, HA49, HA6A, HA69) qui reçoit à chaque fois un 1 outre un bit de données à traiter, est conçu sous forme d'inverseur (IN).

**13.** Multiplicateur selon l'une des revendications précédentes,
caractérisé par le fait que, à la place d'un additionneur complet (VA) qui reçoit deux signaux d'entrée inversés l'un par rapport à l'autre (b, b), il est prévu un semi-additionneur (HA) ou un inverseur.

**14.** Multiplicateur selon la revendication 12,
caractérisé par le fait que la sortie de retenue (C) de l'additionneur complet de second poids le plus grand (VA38, ...) d'une rangée d'additionneurs (R3, ...) est reliée en plus par l'intermédiaire d'un inverseur remplaçant un semi-additionneur (HA39) à chaque fois à une entrée d'au moins un additionneur complet de poids inférieur (VA57, ...) de la rangée d'additionneurs suivante (R5, ...).

**15.** Multiplicateur selon l'une des revendications précédentes,
caractérisé par le fait que le produit partiel de poids le plus grand ($f_5$ ... $f_0$) est calculé par une inversion du multiplicande (x) et par une multiplication par le bit de signe ($y_5$) du multiplicateur (y) ainsi que par l'addition de son bit de signe ($y_5$).

**16.** Multiplicateur selon l'une des revendications précédentes,
caractérisé par le fait que l'additionneur de poids le plus grand (VA66, HA46) ...) d'une rangée d'additionneurs (R3, R5, R7), qui reçoit un 1 en plus d'un bit de données à traiter ($d_5$, $c_5$), est remplacé par un inverseur ou, en plus, un bit inversé (par exemple $\bar{b}_8$) est délivré à l'additionneur en cascade (VA) de la rangée d'additionneurs suivante (par exemple R5).

**17.** Multiplicateur selon l'une des revendications précédentes,
caractérisé par le fait que son circuit comprend des "transformations booléennes".

**18.** Circuit de calcul selon l'une des revendications précédentes,
caractérisé par le fait que, à la place des produits partiels ($a_5$ ... $a_0$, $b_5$ ... $b_0$ ; $a_8$ ... $a_0$, $b_8$ ... $b_0$), des termes sont additionnés de telle sorte que le circuit fonctionne comme un additionneur.

FIG 1

FIG 2

FIG 3

FIG 4

FIG 5

FIG 7

FIG 8

FIG 6

FIG 9

EP 0 752 130 B1

FIG 10

EP 0 752 130 B1

FIG 11

FIG 12

EP 0 752 130 B1

27

FIG 13

EP 0 752 130 B1

FIG 14

FIG 15

FIG 16

FIG 17

FIG 18

FIG 19

EP 0 752 130 B1

34

FIG 20

FIG21

EP 0 752 130 B1

FIG 22